(19) Europäisches Patentamt / European Patent Office / Office européen des brevets

(11) **EP 4 184 242 A1**

(12) **EUROPEAN PATENT APPLICATION**
published in accordance with Art. 153(4) EPC

(43) Date of publication:
**24.05.2023  Bulletin 2023/21**

(21) Application number: **21842119.6**

(22) Date of filing: **06.07.2021**

(51) International Patent Classification (IPC):
*G03B 15/03* (2021.01)    *G03B 15/05* (2021.01)
*H04N 5/225* (2006.01)    *H04N 5/232* (2006.01)
*G01S 17/18* (2020.01)    *G01S 17/894* (2020.01)
*G01S 17/931* (2020.01)

(52) Cooperative Patent Classification (CPC):
**G01S 17/18; G01S 17/894; G01S 17/931;**
G03B 15/03; G03B 15/05; H04N 23/00; H04N 23/60

(86) International application number:
**PCT/JP2021/025500**

(87) International publication number:
**WO 2022/014416 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2020  JP 2020120853
14.07.2020  JP 2020120854
06.08.2020  JP 2020134109**

(71) Applicant: **KOITO MANUFACTURING CO., LTD.
Minato-ku
Tokyo 108-8711 (JP)**

(72) Inventors:
• **KATO Daiki
Shizuoka-shi Shizuoka 424-8764 (JP)**
• **TAKAHASHI Masayuki
Shizuoka-shi Shizuoka 424-8764 (JP)**
• **ITABA Koji
Shizuoka-shi Shizuoka 424-8764 (JP)**
• **TANEMOTO Shun
Shizuoka-shi Shizuoka 424-8764 (JP)**

(74) Representative: **Grünecker Patent- und
Rechtsanwälte
PartG mbB
Leopoldstraße 4
80802 München (DE)**

(54) **GATING CAMERA, VEHICLE SENSING SYSTEM, AND VEHICLE LAMP**

(57)    A gating camera 20 divides a field of view into a plurality of ranges in a depth direction and generates a plurality of slice images corresponding to the plurality of ranges. An illumination device 22 radiates probe light L1. An image sensor 24 outputs a compressed image IMG_COMP obtained by compressing image information related to, among a plurality of lines constituting a raw image IMG_RAW obtained as a result of an exposure, an invalid line that does not contain a target. A camera controller 26 controls a light emission timing of the illumination device 22 and an exposure timing of the image sensor 24. An image processing device 28 receives the compressed image IMG_COMP from the image sensor 24, and decompresses a slice image IMG.

FIG. 1

EP 4 184 242 A1

**Description**

TECHNICAL FIELD

The present invention relates to a gating camera.

BACKGROUND ART

For automated driving and autonomous control on a light distribution of a headlamp, an object identification system that senses a position and a type of an object present around a vehicle is used. The object identification system includes a sensor and an arithmetic processing device that analyzes an output from the sensor. The sensor is selected from a camera, light detection and ranging or laser imaging detection and ranging (LiDAR), a millimeter wave radar, an ultrasonic sonar, and the like in consideration of use, required accuracy, and cost.

Depth information cannot be obtained from a general monocular camera. Therefore, when a plurality of objects located at different distances overlap one another, it is difficult to separate the objects from one another.

As a camera from which the depth information is obtained, a TOF camera is known. The time of flight (TOF) camera projects infrared light by a light emitting device, measures a flight time until reflected light returns to an image sensor, and obtains a TOF image in which the flight time is converted into distance information.

As an active sensor that replaces the TOF camera, a gating camera (or a gated camera) has been proposed (Patent Literatures 1 and 2). The gating camera divides an imaging range into a plurality of ranges, and changes an exposure timing and an exposure time for each range to capture an image. As a result, a slice image is obtained for each target range, and each slice image includes only an object included in the corresponding range.

CITATION LIST

PATENT LITERATURE

Patent Literature 1: JP2009-257981A
Patent Literature 2: WO2017/110417A1

SUMMARY OF INVENTION

TECHNICAL PROBLEM

1. A gating camera includes an image sensor and an image processing device configured to process an output image (sensor image) of the image sensor.

Here, the image sensor and the image processing device are often connected by a serial interface, and a transmission speed of the sensor image therebetween becomes a bottleneck, a time required to generate one slice image becomes long, and a frame rate of the gating camera is limited.

An aspect of the present disclosure has been made in such a situation, and an exemplary object thereof is to provide a gating camera capable of shortening a generation time of a slice image.

2. The inventors have studied a gating camera capable of imaging during the daytime, and have come to recognize the following problems. In imaging during the daytime, it is necessary to use longer wavelengths of infrared light in order to reduce an influence of sunlight. However, a wavelength that can be practically used is 1 $\mu$m to 1.3 $\mu$m, and this wavelength band also includes a spectrum of sunlight.

Therefore, if the gating camera is used in the daytime, a slice image contains a large amount of background noise due to the sunlight, and reflected light from an object, that is, a signal component, is buried.

An aspect of the present disclosure has been made in such a situation, and an exemplary object thereof is to provide a gating camera capable of removing an influence of background noise.

3. Light incident on an image sensor of a gating camera is light in which probe light emitted from the gating camera and reaching an object is reflected or scattered by the object and returned, and thus one round trip is made between the gating camera and the object. In situations such as heavy fog or heavy rain, an intensity of the light incident on the image sensor is reduced because a transmittance between the gating camera and the object is reduced. Therefore, in a condition of a poor visual field, far-range imaging becomes difficult.

An aspect of the present disclosure has been made in such a situation, and an exemplary object thereof is to provide a gating camera capable of operating appropriately according to a quality of the visual field.

SOLUTION TO PROBLEM

1. An aspect of the present disclosure relates to a gating camera that divides a field of view into a plurality of ranges in a depth direction and generates a plurality of slice images corresponding to the plurality of ranges. The gating camera includes: an illumination device configured to radiate probe light; an image sensor configured to generate a raw image by an exposure and output a compressed image obtained by compressing image information related to, among a plurality of lines constituting the raw image, an invalid line that does not contain a target; a camera controller configured to control a light emission timing of the illumination device and an exposure timing of the image sensor; and an image processing device configured to receive the compressed image from the image sensor and decompress the slice image.

2. A gating camera according to an aspect of the present disclosure includes: an illumination device configured to radiate probe light; an image sensor; a camera controller configured to control a light emission timing of the illumination device and an exposure timing of the image sensor, and cause the image sensor to generate a plurality of slice images corresponding to a plurality of ranges; and an image processing device configured to receive the plurality of slice images from the image sensor, select a pixel of interest, set a slice image containing an object in the pixel of interest as a valid image, detect a noise level based on pixel values of pixels of interest in the slice images other than the valid image, and correct the pixel value of the pixel of interest in each of a plurality of slice images based on the noise level.

A gating camera according to an aspect of the present disclosure includes: an illumination device configured to radiate probe light; an image sensor; a camera controller configured to control a light emission timing of the illumination device and an exposure timing of the image sensor, and cause the image sensor to generate a plurality of slice images corresponding to a plurality of ranges; and an image processing device configured to receive the plurality of slice images from the image sensor, select a pixel of interest, detect a noise level based on pixel values of the pixels of interest in all the slice images, and correct the pixel values of the pixels of interest in all the plurality of slice images based on the noise level.

3. A gating camera according to an aspect of the present disclosure includes: an illumination device configured to radiate probe light; an image sensor; and a camera controller configured to control a light emission timing of the illumination device and an exposure timing of the image sensor, and cause the image sensor to generate plural pieces of image data corresponding to a plurality of ranges. The camera controller reflects, in an imaging parameter, visual field information having a correlation with an attenuation coefficient of the probe light.

ADVANTAGEOUS EFFECTS OF INVENTION

According to the aspect of the present disclosure, a generation time of a slice image can be shortened. According to the aspect of the present disclosure, an influence of background noise can be removed. According to the aspect of the present disclosure, an operation can be performed according to a quality of a visual field.

BRIEF DESCRIPTION OF DRAWINGS

Fig. 1 is a block diagram of a sensing system according to Embodiment 1.
Fig. 2 is a diagram illustrating a basic operation of a gating camera.
Fig. 3A and Fig. 3B are diagrams showing slice images obtained by the gating camera.
Fig. 4 is a diagram showing a traveling scene.
Figs. 5A to 5C are diagrams showing signal processing in the traveling scene of Fig. 4.
Fig. 6 is a flowchart showing an operation of the gating camera.
Fig. 7A is a diagram showing a compressed image IMG_COMP, and Fig. 7B is a diagram showing line data.
Fig. 8 is a diagram illustrating processing of a gating camera according to Modification 1.3.
Fig. 9 is a block diagram of a sensing system according to Embodiment 2.1.
Fig. 10 is a diagram illustrating a basic operation of the gating camera.
Fig. 11A and Fig. 11B are diagrams illustrating slice images obtained by the gating camera.
Fig. 12 is a flowchart of noise removal according to Embodiment 2.1.
Fig. 13 is a diagram illustrating the noise removal according to Embodiment 2.1.
Fig. 14A and Fig. 14B are diagrams illustrating correction processing according to Embodiment 2.1.
Fig. 15A and Fig. 15B are diagrams illustrating correction processing according to Embodiment 2.2.
Fig. 16 is a block diagram of a sensing system according to Embodiment 3.
Fig. 17 is a diagram illustrating an operation of the gating camera.
Fig. 18A and Fig. 18B are diagrams illustrating images captured by the gating camera.
Fig. 19 is a diagram illustrating a first control method in the gating camera in Fig. 16.
Fig. 20A and Fig. 20B are time charts showing an operation of the first control method of the gating camera in Fig. 16.
Fig. 21A and Fig. 21B are diagrams illustrating a second control method in the gating camera in Fig. 16.
Fig. 22A and Fig. 22B are diagrams showing a plurality of ranges corresponding to the control in Fig. 21A.
Fig. 23 is a diagram illustrating an operation according to a third control method of the gating camera in Fig. 16.
Figs. 24A to 24C are diagrams showing a plurality of ranges in the third control method.
Fig. 25 is a block diagram of a sensing system.
Fig. 26A and Fig. 26B are diagrams showing an automobile provided with the gating camera.

Fig. 27 is a block diagram showing a vehicle lamp provided with an object detection system.

DESCRIPTION OF EMBODIMENTS

An overview of some exemplary embodiments of the present disclosure will be described. As an introduction of the detailed description to be described later, this overview is intended to simplify and describe some concepts of one or more embodiments for the purpose of basic understanding of the embodiments, and is not intended to limit the scope of the invention or disclosure. This overview is not a comprehensive overview of all conceivable embodiments, and does not intend to specify an important element of all embodiments or to draw a range of a part or all of aspects. For convenience, "an embodiment" may be used to refer to one embodiment (example or modification) or a plurality of embodiments (examples or modifications) disclosed in the present description.

1. A gating camera according to an embodiment divides a field of view into a plurality of ranges in a depth direction and generates a plurality of slice images corresponding to the plurality of ranges. The gating camera includes: an illumination device configured to radiate probe light; an image sensor configured to generate a raw image by an exposure and output a compressed image obtained by compressing image information related to, among a plurality of lines constituting the raw image, an invalid line that does not contain a target; a camera controller configured to control a light emission timing of the illumination device and an exposure timing of the image sensor; and an image processing device configured to receive the compressed image from the image sensor and decompress the slice image.

It is determined whether the target is included for each line of the raw image obtained in the image sensor, and if the line does not include the target, a transmission amount from the image sensor to the image processing device is compressed, so that a transmission time can be shortened, and a generation time of the slice image can be shortened.

In the embodiment, the image sensor may set, as an invalid line, a line containing pixel values of all pixels smaller than a predetermined threshold.

In the embodiment, with respect to a valid line which is not an invalid line, the image sensor may transmit line data including a line number, a header whose value is a first value, and pixel values of all pixels included in the valid line, and with respect to the invalid line, the image sensor may transmit line data including a line number and a header whose value is a second value.

In the embodiment, when the value of the header of the received line data is the second value, the image processing device may set all pixel values of the line to 0.

2. A gating camera according to an embodiment is a gating camera for dividing a field of view into a plurality of ranges in a depth direction and generating a plurality of slice images corresponding to the plurality of ranges, the gating camera including: an illumination device configured to radiate probe light; an image sensor; a camera controller configured to control a light emission timing of the illumination device and an exposure timing of the image sensor, and cause the image sensor to generate the plurality of slice images corresponding to the plurality of ranges; and an image processing device configured to receive the plurality of slice images from the image sensor, select a pixel of interest, set a slice image containing an object in the pixel of interest as a valid image, detect a noise level based on pixel values of pixels of interest in the slice images other than the valid image, and correct the pixel value of the pixel of interest in each of the plurality of slice images based on the noise level.

In an ideal gating camera, one object appears in only one of the plurality of slice images. Therefore, focusing on the same pixels in the plurality of slice images, only one slice image has a pixel value corresponding to reflection from the object, and pixel values of the other slice images can be regarded as noise. According to the present embodiment, the noise level can be acquired while normal imaging is performed without performing imaging for measuring the noise level.

In the embodiment, the noise level may be an average value of the pixel values of the pixels of interest in the slice images other than the valid image.

In the embodiment, regarding each pixel, when a pixel value of a pixel of interest of a slice image exceeds a predetermined threshold, the image processing device sets the slice image as the valid image.

In the embodiment, regarding each pixel, the image processing device may use the slice image with the largest pixel value as the slice image containing the object.

A gating camera according to an embodiment includes: an illumination device configured to radiate probe light; an image sensor; a camera controller configured to control a light emission timing of the illumination device and an exposure timing of the image sensor, and cause the image sensor to generate a plurality of slice images corresponding to a plurality of ranges; and an image processing device configured to receive the plurality of slice images from the image sensor, select a pixel of interest, detect a noise level based on pixel values of the pixels of interest in all the slice images, and correct the pixel values of the pixels of interest in all the plurality of slice images based on the noise level.

When imaging with a large number of ranges, in other words, with a large number of slice images, an influence of the valid image is small, and thus, by treating the pixel values of all the slice images as noise, noise level detection processing can be simplified.

In the embodiment, the noise level may be an average value of the pixel values of the pixels of interest in all the slice images.

A gating camera according to an embodiment includes: an illumination device configured to radiate probe light; an image sensor; and a camera controller configured to control a light emission timing of the illumination device and an exposure timing of the image sensor, and cause the image sensor to generate plural pieces of image data corresponding to a plurality of ranges. The camera controller reflects, in an imaging parameter, visual field information having a correlation with an attenuation coefficient of the probe light.

By dynamically and adaptively controlling the imaging parameters according to the attenuation coefficient of the probe light, it becomes possible to operate according to a quality of a visual field.

In the embodiment, the camera controller may increase the number of times of exposure for generating one slice image as the attenuation coefficient of the probe light increases. By increasing the number of times of exposure in a situation where the attenuation coefficient of the probe light is large, a large amount of reflected or scattered light from the object can be accumulated, and an image quality of the slice image can be improved.

In the embodiment, the camera controller holds a plurality of relations between range numbers and the number of times of exposure, and may select one relation according to the visual field information.

If the attenuation coefficient is large, a resolution in a depth direction may be increased in exchange for giving up long-distance imaging.

In the embodiment, the camera controller may decrease the number of ranges as measurement targets sequentially from a far side as the attenuation coefficient of the probe light increases. If the attenuation coefficient is large, a frame rate of the slice images in the near range can be increased by giving up the long-distance imaging and concentrating on short-distance sensing.

Hereinafter, preferred embodiments will be described with reference to the drawings. The same or equivalent components, members, and processing shown in the drawings are denoted by the same reference numerals, and repeated descriptions thereof will be omitted as appropriate. The embodiments are not intended to limit the scope of the present disclosure and invention and are merely used for description, and all features described in the embodiments and combinations thereof are not necessarily essential features of the present disclosure and invention.

(Embodiment 1)

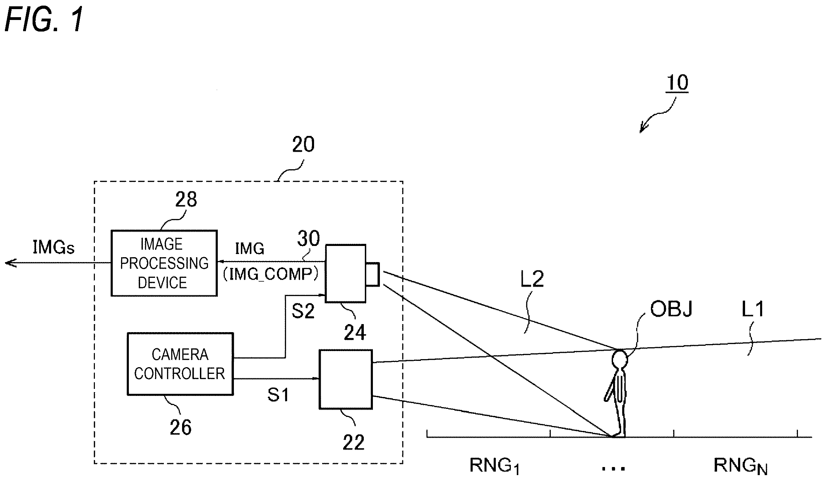

Fig. 1 is a block diagram of a sensing system 10 according to Embodiment 1. The sensing system 10 is mounted on a vehicle such as an automobile or a motorcycle, and detects an object OBJ present around the vehicle.

The sensing system 10 mainly includes a gating camera 20. The gating camera 20 includes an illumination device 22, an image sensor 24, a camera controller 26, and an image processing device 28. Imaging performed by the gating camera 20 is performed by dividing a field of view into a plurality of N (N ≥ 2) ranges $RNG_1$ to $RNG_N$ in a depth direction. Adjacent ranges may overlap each other in the depth direction at boundaries of the ranges.

The illumination device 22 irradiates a front of the vehicle with probe light L1 in synchronization with a light emission timing signal S 1 supplied from the camera controller 26. The probe light L1 is preferably infrared light, but is not limited thereto, and may be visible light or ultraviolet light having a predetermined wavelength.

The image sensor 24 includes a plurality of pixels, can perform exposure control in synchronization with an exposure timing signal S2 supplied from the camera controller 26, and generates a raw image including a plurality of pixels. The image sensor 24 has a sensitivity to the same wavelength as that of the probe light L1, and images reflected light (return light) L2 reflected by the object OBJ. A slice image $IMG_i$ generated by the image sensor 24 with respect to an i-th range $RNG_i$ is referred to as a raw image or a primary image as necessary, and is distinguished from a slice image $IMGs_i$ which is finally output from the gating camera 20.

The camera controller 26 controls an irradiation timing (light emission timing) of the probe light L1 from the illumination device 22 and an exposure timing of the image sensor 24. The camera controller 26 can be implemented by a combination of a processor (hardware) such as a central processing unit (CPU), a micro processing unit (MPU), or a microcomputer and a software program executed by the processor (hardware).

The image sensor 24 and the image processing device 28 are connected via a serial interface 30. Here, if all pixels of a raw image $IMG\_RAW_i$ generated in the image sensor 24 are transmitted to the image processing device 28 as a primary image IMG, a transmission time becomes long and a sensing time becomes long.

Therefore, in the present embodiment, the image sensor 24 transmits a compressed image IMG_COMP; obtained by removing unnecessary lines from the raw image IMG_RAW; to the image processing device 28 as a primary image $IMG_i$.

Specifically, the image sensor 24 detects an invalid line that does not contain a target, that is, an object as a detection target, from a plurality of lines that constitute the raw image $IMG\_RAW_i$ obtained as a result of the exposure. Then, from the raw image $IMG\_RAW_i$, image information regarding the invalid line is compressed to generate the compressed image $IMG\_COMP_i$.

The image processing device 28 receives the compressed image $IMG\_COMP_i$ from the image sensor 24 as the primary image $IMG_i$. Then, the compressed image IMG_COMPi is decompressed to form the slice image $IMGs_i$.

The configuration of the gating camera 20 is as described above. Next, an operation thereof will be described.

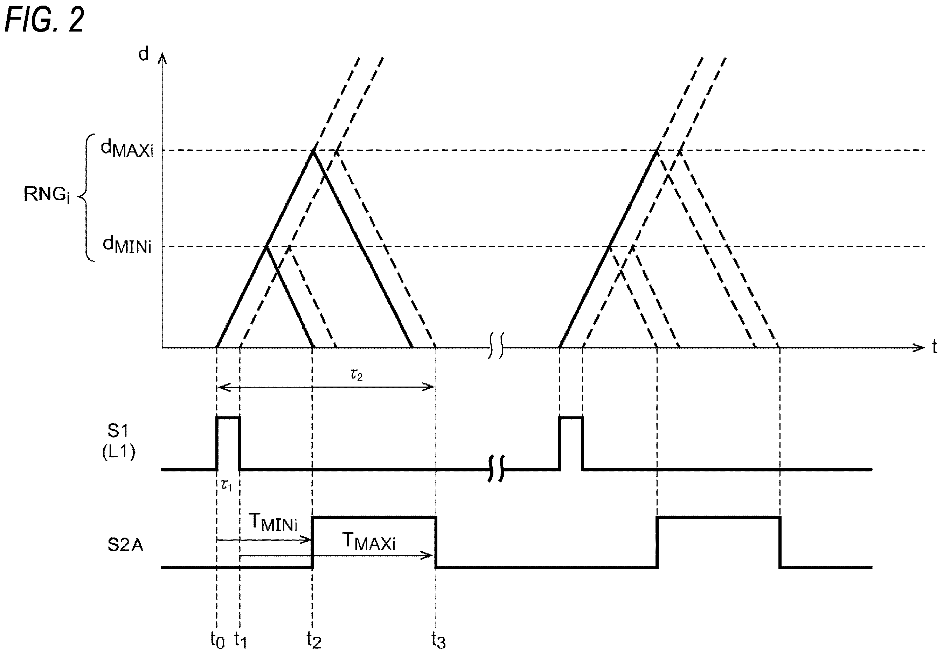

Fig. 2 is a diagram illustrating a basic operation of the gating camera 20. Fig. 2 shows a state where the i-th range $RNG_i$ is sensed as a range of interest (ROI). The illumination device 22 emits light during a light emission period $\tau_1$ between time points $t_0$ and ti in synchronization with the light emission timing signal S1. An uppermost stage shows a diagram of light beams in which a horizontal axis represents a time and a vertical axis represents a distance. A distance from the gating camera 20 to a near side boundary of the range $RNG_i$ is set as $d_{MINi}$, and a distance from the gating camera 20 to a far side boundary of the range $RNG_i$ is set as $d_{MAXi}$.

A round trip time $T_{MINi}$ until light emitted from the illumination device 22 at a time point reaches the distance $d_{MINi}$ and then the reflected light of the light returns to the image sensor 24 is $T_{MINi} = 2 \times d_{MINi}/c$. c is the speed of light.

Similarly, a round trip time $T_{MAXi}$ until light emitted from the illumination device 22 at a time point reaches the distance $d_{MAXi}$ and then reflected light of the light returns to the image sensor 24 is $T_{MAXi} = 2 \times d_{MAXi}/c$.

When it is desired to image only the object OBJ contained in the range $RNG_i$, the camera controller 26 generates the exposure timing signal S2 such that the exposure is started at a time point tz = $t_0$ + $T_{MINi}$ and the exposure is ended at a time point $t_3$ = $t_1$ + $T_{MAXi}$. This is one exposure operation.

When the i-th range $RNG_i$ is imaged, a plurality of sets of light emission and exposure may be performed. In this case, the camera controller 26 may repeat the above exposure operation a plurality of times during a predetermined period $\tau_2$.

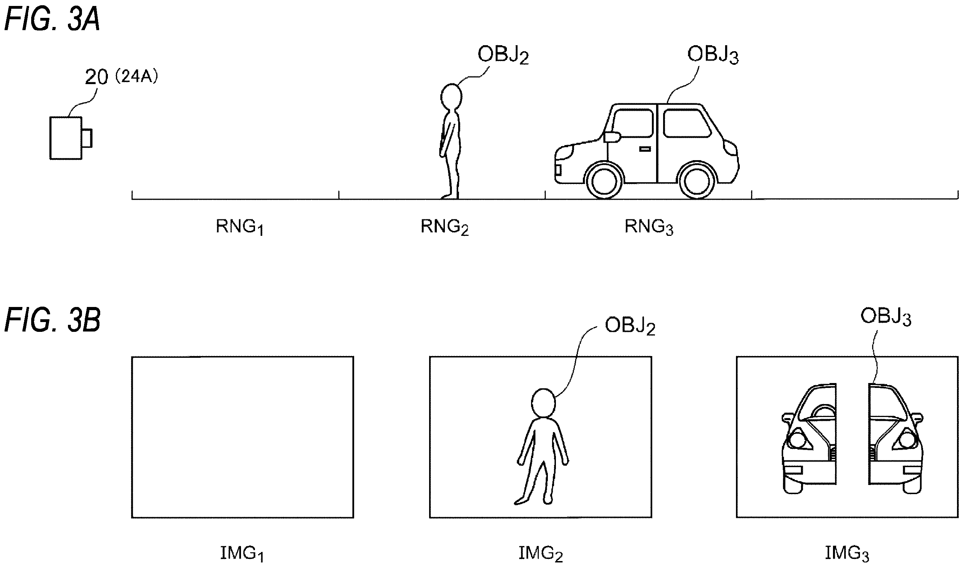

Fig. 3A and Fig. 3B are diagrams illustrating slice images obtained by the gating camera 20. In an example of Fig. 3A, an object (pedestrian) $OBJ_2$ is present in a range $RNG_2$, and an object (vehicle) $OBJ_3$ is present in a range $RNG_3$. Fig. 3B shows a plurality of slice images $IMG_1$ to $IMG_3$ obtained in a situation in Fig. 3A. When the slice image $IMG_1$ is captured, since the image sensor is exposed merely by the reflected light from the range $RNG_1$, no object image appears in the slice image $IMG_1$.

When the slice image $IMG_2$ is captured, since the image sensor is exposed merely by the reflected light from the range $RNG_2$, only the object image $OBJ_2$ appears in the slice image $IMG_2$. Similarly, when the slice image $IMG_3$ is captured, since the image sensor is exposed merely by the reflected light from the range $RNG_3$, only the object image $OBJ_3$ appears in the slice image $IMG_3$. As described above, according to the gating camera 20, it is possible to separately image an object for each range.

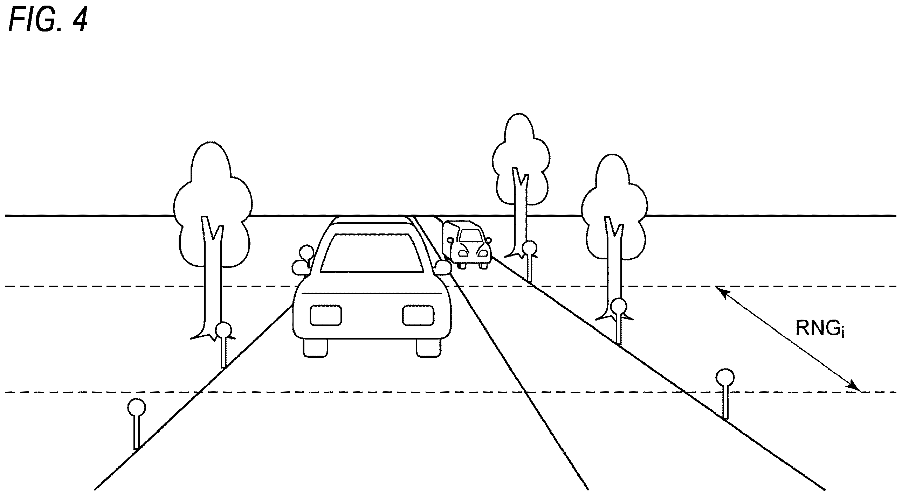

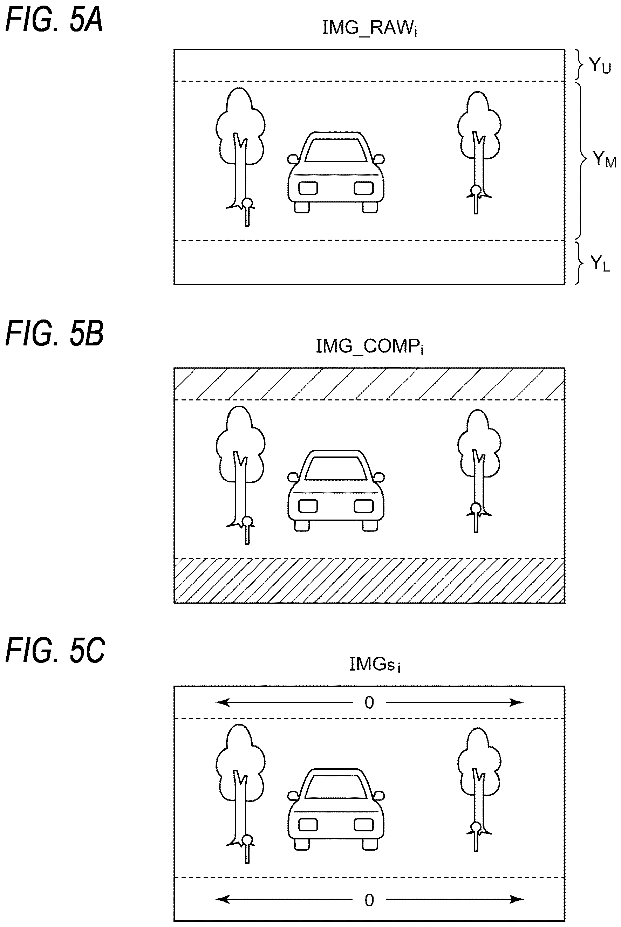

Next, image compression and transmission in the gating camera 20 of Fig. 1 will be described with reference to Fig. 4 and Figs. 5A to 5C. Fig. 4 is a diagram showing a traveling scene. $RNG_i$ is a range as a sensing target (range of interest). Figs. 5A to 5C are diagrams showing signal processing in the traveling scene of Fig. 4. Fig. 5A shows the raw image $IMG\_RAW_i$ obtained in the traveling scene of Fig. 4. The raw image $IMG\_RAW_i$ shows a target contained in the range $RNG_i$. In this example, the target is in a middle range $Y_M$ of the raw image $IMG\_RAW_i$. An upper range $Y_U$ is empty and does not contain any targets.

In this example, a lower range $Y_L$ of the raw image $IMG\_RAW_i$ corresponds to the ground in a previous range $RNG_{i-1}$, and the range $Y_L$ also does not contain a target.

The image sensor 24 determines lines contained in the ranges $Y_U$ and $Y_L$ as invalid lines. For example, the image sensor 24 sequentially scans the lines of the raw image $IMG\_RAW_i$, and when all pixels of the lines are smaller than a predetermined threshold, the lines are regarded as invalid lines.

Determination on the invalid lines and the valid lines may be performed in each sensing period. One sensing period means a period of entire imaging of the plurality of ranges $RNG_1$ to $RNG_N$.

Alternatively, the determination on the invalid lines and the valid lines may be performed once in a plurality of sensing periods. In this case, a line once determined as the invalid line is treated as the invalid line until a next determination result is obtained.

Fig. 5B shows the compressed image $IMG\_COMP_i$ obtained from the raw image $IMG\_RAW_i$ of Fig. 5A. The compressed image $IMG\_COMP_i$ is obtained by compressing the raw image $IMG\_RAW_i$ such that the lines contained in the ranges $Y_U$ and $Y_L$ are not contained in the image information.

Fig. 5C shows the final slice image $IMGs_i$ obtained by decompressing the compressed image $IMG\_COMP$; of Fig. 5B. The image processing device 28 receiving the compressed image $IMG\_COMP_i$ reproduces the slice image $IMGs_i$ by replacing the invalid lines that do not contain the image information with pixels of a predetermined value (for example, value 0).

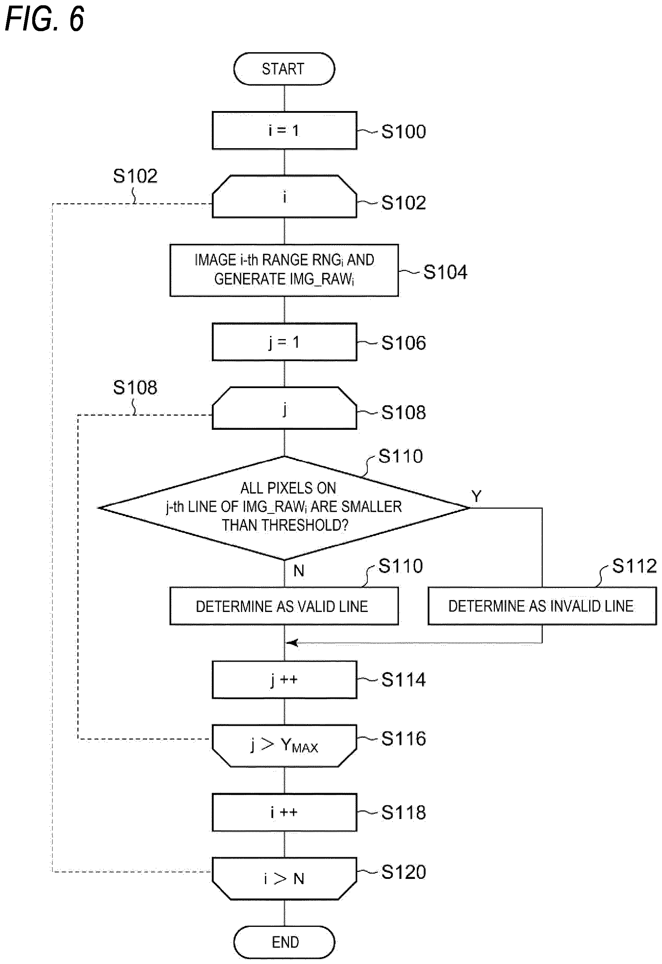

Fig. 6 is a flowchart showing an operation of the gating camera 20. First, a variable i is initialized to 1 (S100). The variable i is a variable indicating the range of interest. For example, i = 1 indicates that the first range $RNG_1$ is the measurement target.

Subsequently, a loop S102 is executed with respect to the variable i. First, with the i-th range $RNG_i$ as the target, light emission performed by the illumination device 22 and an exposure performed by the image sensor 24 are performed to generate the raw image $IMG\_RAW_i$ (S104).

Subsequently, it is determined whether the lines contained in the raw image $IMG\_RAW_i$ are valid or invalid. First, a variable j is initialized to 1 (S106). The variable j indicates a line number of a determination target of the raw image IMG_RAWi. A loop S108 is then executed with respect to the variable j.

It is determined whether pixel values of all pixels on a j-th line of the raw image $IMG\_RAW_i$ are smaller

than a threshold (S110). If all the pixel values are smaller than the threshold (Y of S110), the j-th line is determined as the invalid line (S112). Otherwise (N of S1 10), the j-th line is determined as the valid line. The variable j is incremented. The loop S108 is repeated when the variable j is smaller than the number of lines $Y_{MAX}$ (resolution in a vertical direction) of the raw image $IMG\_RAW_i$. The processing exits from the loop S108 if the variable j exceeds the number of lines $Y_{MAX}$ of the raw image $IMG\_RAW_i$.

If the processing exits from the loop S108, the variable i is incremented (S118), and a next range becomes the measurement target. The loop S02 is repeated when the variable i is smaller than a maximum number N of the ranges. If the variable i exceeds the maximum number N and imaging of all the ranges $RNG_1$ to $RNG_N$ is ended, the processing ends.

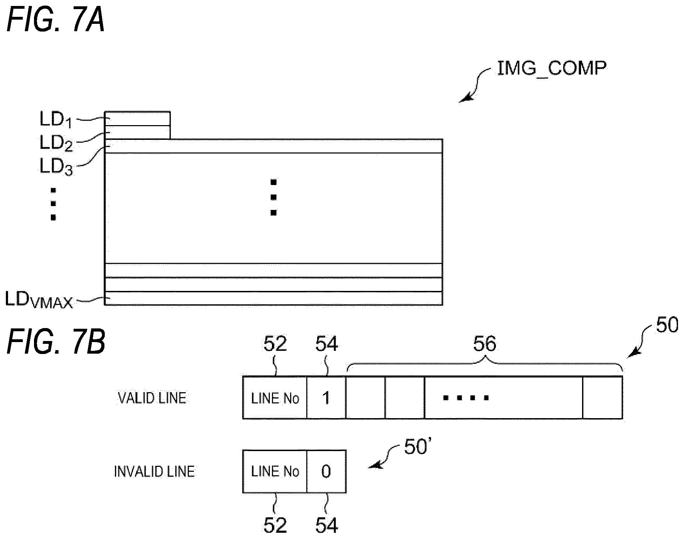

Next, an image compression method will be described. Fig. 7A is a diagram showing a compressed image IMG_COMP, and Fig. 7B is a diagram showing line data. The compressed image IMG_COMP includes plural pieces of line data $LD_1$ to $LD_{VMAX}$. The line data LD contains different information depending on whether the line is a valid line or an invalid line. In this example, it is assumed that first and second lines are the invalid lines and the rest are the valid lines. Line data 50 of the valid line includes a line number 52, a header 54, and pixel values 56 for all pixels in that line. Line data 50' of the invalid line includes the line number 52 and the header 54, and does not include the pixel values 56. The header 54 includes an identifier indicating whether the line is a valid line or an invalid line, and for example, the header 54 in the valid line stores a value of 1, and the header 54 in the invalid line stores a value of 0.

As shown in Fig. 7A and Fig. 7B, in the compressed image IMG_COMP, the image information is completely removed for the invalid line. Therefore, a time required to transmit the invalid line is a transmission time of the line number 52 and the header 54, and can be greatly reduced.

The compressed image IMG_COMP of Fig. 7A can be decompressed in the image processing device 28 as follows. The image processing device 28 refers to the header 54 of the line data 50. When the value is 1, the pixel value 56 following the header is set as a pixel value of the corresponding line of the slice image IMG. When the value of the header 54 is 0, the pixel value of the corresponding line of the slice image IMG is filled with 0.

The present invention has been described above based on the embodiment. The embodiment is intended to be illustrative only, and it will be obvious to those skilled in the art that various modifications can be made by combining components and processes in the embodiment and that such modifications are also within the scope of the present invention. Hereinafter, such modifications will be described.

(Modification 1.1)

The compressed image IMG_COMP includes only the line data of the valid line. In this case, the valid line contains the line number and the pixel values of all the pixels following the line number. The image processing device 28 fills with 0 in the line numbers not included in the received line data.

(Modification 1.2)

In the previous examples, pixel information regarding the invalid line is not transmitted, but the image information may be transmitted. For example, the pixel regarding the invalid line may be thinned and transmitted. If it is assumed that one pixel of adjacent M pixels in a horizontal direction is transmitted, the transmission time can be shortened to 1/M times. The image processing device 28 may perform decompression to obtain the slice image IMG with the same pixel value as the adjacent M pixels.

(Modification 1.3)

In Embodiment 1, whether a target is contained is determined for each line, but the present invention is not limited thereto, and a predetermined line of the raw image IMG_RAW may be determined in advance as the invalid line for each range.

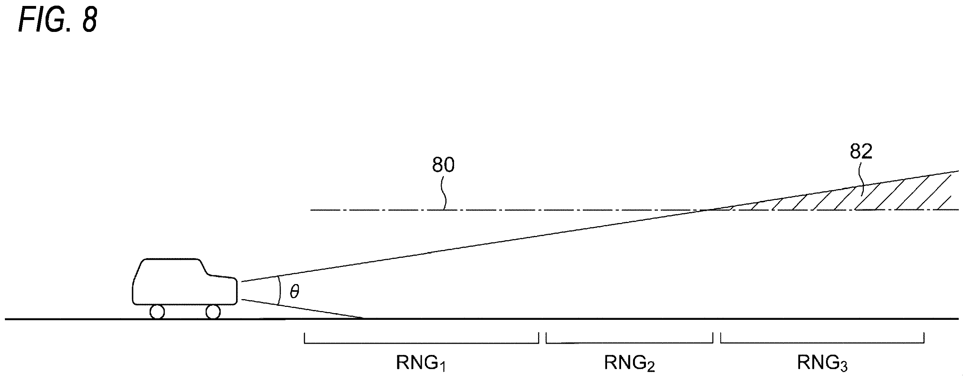

Fig. 8 is a diagram illustrating processing of a gating camera according to Modification 1.3. In Fig. 8, a dashed-dotted line 80 indicates a highest position of a target to be assumed. It is assumed that an angle of view $\theta$ in the vertical direction of the image sensor 24 is constant regardless of the range. When the close ranges $RNG_1$ and $RNG_2$ are imaged, only the ranges below the dashed-dotted line 80 are imaged. On the other hand, regarding the far range $RNG_3$, a range 82 higher than the dashed-dotted line is contained in the imaging range (angle of view $\theta$ of the image sensor), but a possibility that the target as a sensing target is contained in the range 82 can be said to be low. Therefore, regarding a raw image $IMG\_RAW_3$, the range 82 above a line corresponding to the dashed-dotted line 80 can be defined as the invalid line.

(Embodiment 2.1)

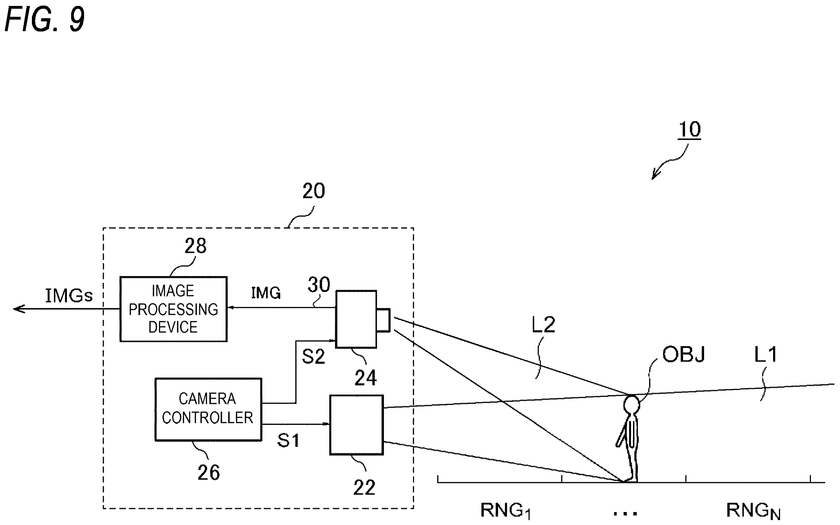

Fig. 9 is a block diagram of the sensing system 10 according to Embodiment 1. The sensing system 10 is mounted on a vehicle such as an automobile or a motorcycle, and detects the object OBJ present around the vehicle.

The sensing system 10 mainly includes the gating camera 20. The gating camera 20 includes the illumination device 22, the image sensor 24, the camera controller 26, and the image processing device 28. Imaging performed by the gating camera 20 is performed by dividing the field of view into the plurality of N (N ≥ 2) ranges $RNG_1$ to $RNG_N$ in the depth direction. The adjacent ranges may overlap each other in the depth direction at boundaries of the ranges.

The illumination device 22 irradiates the front of the vehicle with the probe light L1 in synchronization with the light emission timing signal S1 supplied from the camera controller 26. The probe light L1 is preferably infrared light, but is not limited thereto, and may be visible light or ultraviolet light having a predetermined wavelength. The gating camera 20 according to the present embodiment is capable of sensing not only at night but also during the daytime, and thus a wavelength longer than 0.9 μm is selected.

The image sensor 24 includes the plurality of pixels, can perform the exposure control in synchronization with the exposure timing signal S2 supplied from the camera controller 26, and generates the slice image IMG including the plurality of pixels. The image sensor 24 has a sensitivity to the same wavelength as that of the probe light L1, and images the reflected light (return light) L2 reflected by the object OBJ. The slice image IMG generated by the image sensor 24 with respect to the i-th range $RNG_i$ is referred to as a raw image or a primary image as necessary, and is distinguished from the slice image IMGs which is a final output from the gating camera 20.

The camera controller 26 controls the irradiation timing (light emission timing) of the probe light L1 from the illumination device 22 and the exposure timing of the image sensor 24, and causes the image sensor 24 to generate a plurality of slice images $IMG_1$ to $IMG_N$ corresponding to the plurality of ranges $RNG_1$ to $RNG_N$. The camera controller 26 can be implemented by a combination of a processor (hardware) such as a central processing unit (CPU), a micro processing unit (MPU), or a microcomputer and a software program executed by the processor (hardware).

The image sensor 24 and the image processing device 28 are connected via the serial interface 30, and the plurality of slice images (primary images) $IMG_1$ to $IMG_N$ obtained in the plurality of ranges $RNG_1$ to $RNG_N$ are transmitted to the image processing device 28. The primary image $IMG_i$ may be the raw image $IMG\_RAW_i$ itself, or an image obtained by processing the raw image $IMG\_RAW_i$.

The basic configuration of the gating camera 20 is as described above. Next, an operation thereof will be described.

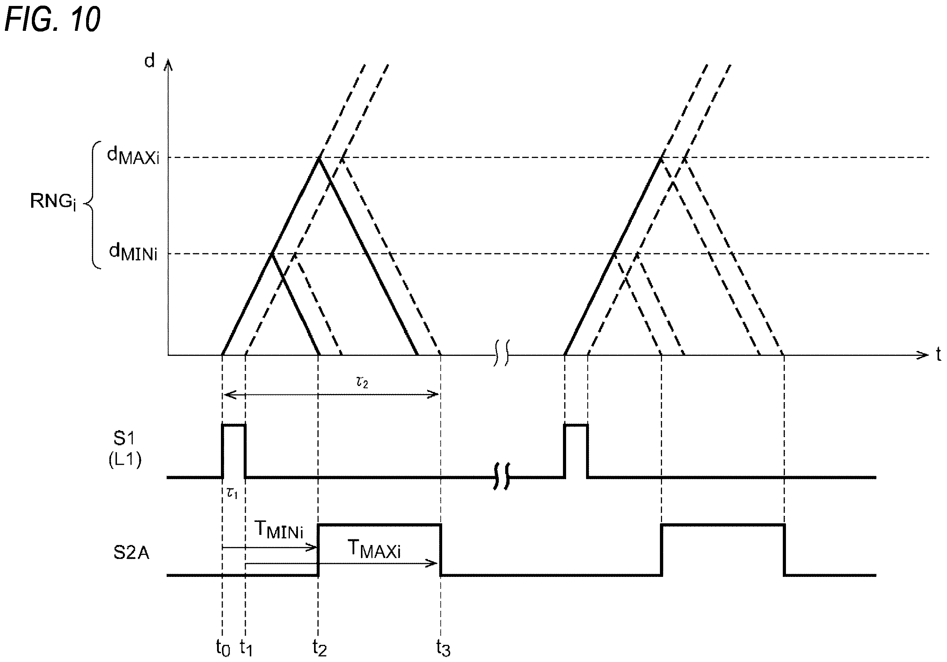

Fig. 10 is a diagram illustrating a basic operation of the gating camera 20. Fig. 10 shows a state where the i-th range $RNG_i$ is sensed as the range of interest (ROI). The illumination device 22 emits the light during the light emission period $\tau_1$ between the time points $t_0$ and $t_1$ in synchronization with the light emission timing signal S1. An uppermost stage shows a diagram of light beams in which a horizontal axis represents a time and a vertical axis represents a distance. The distance from the gating camera 20 to the near side boundary of the range $RNG_i$ is set as the $d_{MINi}$, and the distance from the gating camera 20 to the far side boundary of the range $RNG_i$ is set as $d_{MAXi}$.

The round trip time $T_{MINi}$ until the light emitted from the illumination device 22 at a time point reaches the distance $d_{MINi}$ and then the reflected light of the light returns to the image sensor 24 is $T_{MINi} = 2 \times d_{MINi}/c$. c is the speed of light.

Similarly, the round trip time $T_{MAXi}$ until the light emitted from the illumination device 22 at a time point reaches the distance $d_{MAXi}$ and then the reflected light of the light returns to the image sensor 24 is $T_{MAXi} = 2 \times d_{MAXi}/c$.

When it is desired to image only the object OBJ contained in the range $RNG_i$, the camera controller 26 generates the exposure timing signal S2 such that the exposure is started at the time point $tz = t_0 + T_{MINi}$ and the exposure is ended at the time point $t_3 = t_1 + T_{MAXi}$. This is one exposure operation.

When the i-th range $RNG_i$ is imaged, the plurality of sets of light emission and exposure may be performed. In this case, the camera controller 26 may repeat the above exposure operation a plurality of times during the predetermined period $\tau_2$.

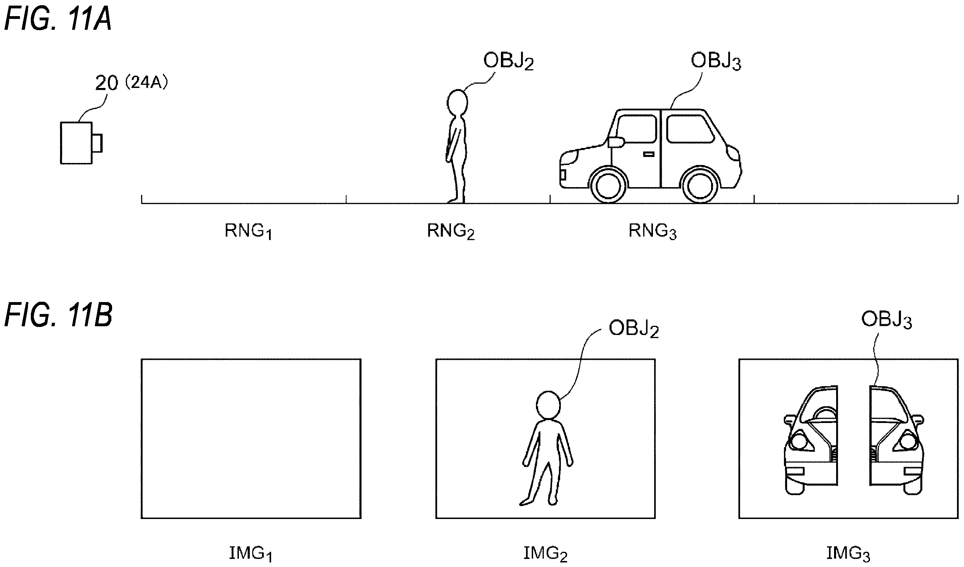

Fig. 11A and Fig. 11B are diagrams illustrating slice images obtained by the gating camera 20. In an example of Fig. 11A, the object (pedestrian) $OBJ_2$ is present in the range $RNG_2$, and the object (vehicle) $OBJ_3$ is present in the range $RNG_3$. Fig. 11B shows the plurality of slice images $IMG_1$ to $IMG_3$ obtained in the situation in Fig. 11A. When the slice image $IMG_1$ is captured, since the image sensor is exposed merely by the reflected light from the range $RNG_1$, no object image appears in the slice image $IMG_1$.

When the slice image $IMG_2$ is captured, since the image sensor is exposed merely by the reflected light from the range $RNG_2$, only the object image $OBJ_2$ appears in the slice image $IMG_2$. Similarly, when the slice image $IMG_3$ is captured, since the image sensor is exposed merely by the reflected light from the range $RNG_3$, only the object image $OBJ_3$ appears in the slice image $IMG_3$. As described above, according to the gating camera 20, it is possible to separately image an object for each range.

Reference is made back to Fig. 9. As described above, since the gating camera 20 performs sensing even during the daytime, the sunlight is incident on the image sensor 24. Since the sunlight contains spectral components in the wavelength used by the gating camera 20, the sunlight becomes the background noise and reduces an S/N ratio of the image. Therefore, the image processing device 28 has a function of removing the background noise from the plurality of slice images $IMG_1$ to $IMG_N$. Next, the noise removing function will be described.

The image processing device 28 receives the plurality of slice images $IMG_1$ to $IMG_N$ from the image sensor 24. Aj-th pixel of the i-th ($1 \leq i \leq N$) slice image $IMG_i$ is denoted as $IMG_i(j)$. The image processing device 28 selects each pixel of the plurality of slice images $IMG_1$ to $IMG_N$ as the pixel of interest, and detects a noise level for each pixel of interest.

The image processing device 28 sets j-th pixels of the plurality of slice images $IMG_1$ to $IMG_N$ as the pixels of interest. Among the plurality of slice images $IMG_1$ to $IMG_N$, the slice image containing the object at the position of the pixel of interest is defined as the valid image. For example, the image processing device 28 sets, as the valid image, the slice image containing the maximum pixel value among the plurality of pixels $IMG_1(j)$ to $IMG_N(j)$. When a value of the $IMG_M(j)$ is maximum, the M-th slice image $IMG_M$ is set as the valid image.

The image processing device 28 detects a noise level $N(j)$ based on values of the pixels $IMG_1(j)$ to $IMG_{M-1}(j)$ and $IMG_{M+1}(j)$ to $IMG_N(j)$ of the plurality of slice images (referred to as invalid images) other than the valid image $IMG_M$. Then, the pixel values of the pixels $IMG1_1(j)$ to $IMGrr(j)$ of the plurality of slice images $IMG_1$ to $IMG_N$ are corrected based on the noise level $N(j)$. The image processing device 28 outputs the corrected slice images as the final slice images IMGs.

Here, for ease of description, it is assumed that depths of all ranges $RNG_1$ to $RNG_N$ are equal, in other words, the exposure times of all ranges are equal. In this case, the noise level $N(j)$ can be obtained by simply averaging the pixel values of the pixels of interest in the invalid image $IMG_k$ ($k=1$ to $N$, where $k \neq M$), and the noise level $N(j)$ is expressed by Formula (1).

$$N(j) = \Sigma_k{}^{k \neq m} IMG_k(j)/(N - 1) \ (1)$$

The correction may be performed by subtracting the noise level $N(j)$ from the slice image $IMG_k(j)$. A pixel value of the corrected slice image $IMG_k'(j)$ is expressed by Formula (2).

$$IMG_k'(j) = IMG_k(j) - N(j) \ (2)$$

The image processing device 28 repeats the same processing for all the pixels. Here, the pixel value after the correction is processed so as not to fall below zero.

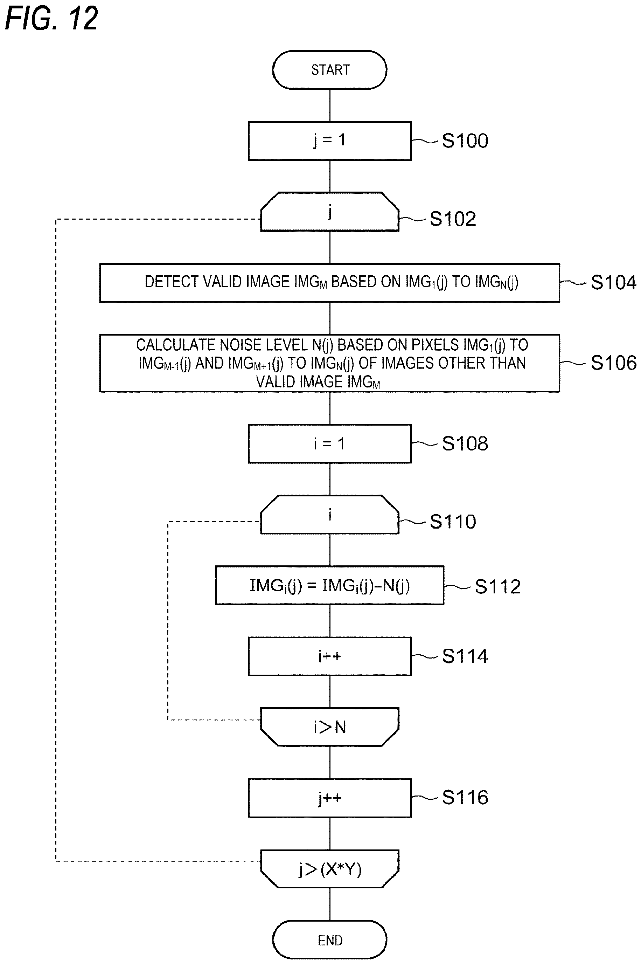

Fig. 12 is a flowchart of noise removal. i represents a variable indicating a number of the slice image, and j represents a variable indicating a position of the pixel of interest.

First, j is initialized (S100). Then, a loop S102 is repeated for each pixel.

The j-th pixels of interest $IMG_1(j)$ to $IMG_N(j)$ of the plurality of slice images $IMG_1$ to $IMG_N$ are referred to, and the valid image $IMG_M$ is detected based on the values of the pixels (S104). Then, the noise level $N(j)$ is calculated based on the j-th pixels $IMG_1(j)$ to $IMG_{M-1}(j)$

and $IMG_{M+1}(j)$ to $IMG_N(j)$ of the slice images $IMG_1$ to $IMG_{M-1}$ and $IMG_{M+1}$ to $IMG_N$ other than the valid image $IMG_M$ (S106).

Subsequently, the variable i is initialized (S108) and a loop S110 is executed. Specifically, the noise level $N(j)$ is subtracted from the pixel $IMG_i(j)$ corresponding to the i-th slice image $IMG_i$ (S112). Then, the variable i is incremented (S114). If $i \leq N$, the processing returns to step S112, and if $i > N$, the processing exits from the loop S110.

Subsequently, the variable j is incremented (S116). If $j \leq X \times Y$, the processing returns to step S102 to repeat the same processing for the next pixel. If $j > X \times Y$, the processing exits from the loop S102 and ends. $X \times Y$ represents a total number of pixels in the slice images.

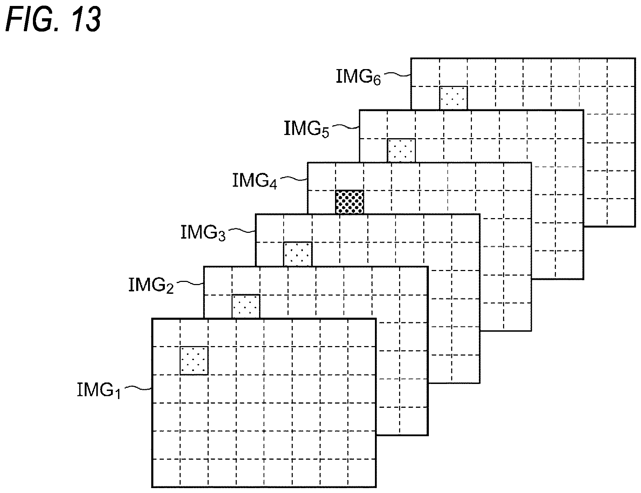

Fig. 13 is a diagram illustrating the noise removal. Fig. 13 shows N slice images $IMG_1$ to $IMG_N$ obtained in once imaging, each slice image contains $X \times Y$ pixels, and the j-th pixel of interest is hatched.

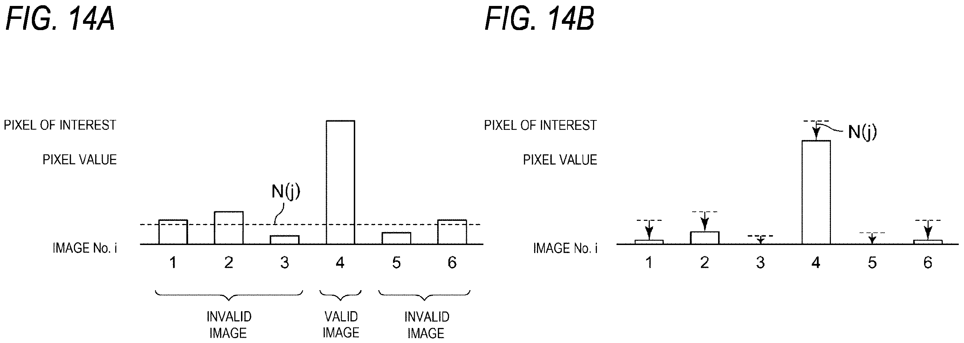

Fig. 14A and Fig. 14B are diagrams showing pixel values before and after the correction of the pixels of interest of N slice images $IMG_1$ to $IMG_N$. Here, $N = 6$, and the slice image with $M = 4$ is the valid image.

In the ideal gating camera, one object appears in only one of the plurality of slice images $IMG_1$ to $IMG_N$. Therefore, focusing on the same pixels in the plurality of slice images $IMG_1$ to $IMG_N$, only one slice image (here, $M = 4$, that is, slice image $IMG_4$) has a large pixel value corresponding to the reflection from the object, and the pixel values of the other invalid images $IMG_1$, $IMG_2$, $IMG_3$, $IMG_5$, $IMG_6$ can be regarded as the background noise. Therefore, the pixel values of the pixels of interest $IMG_1(j)$, $IMGz(j)$, $IMG_3(j)$, $IMG_5(j)$, $IMG_6(j)$ of the invalid images $IMG_1$, $IMG_2$, $IMG_3$, $IMG_5$, $IMG_6$ are processed, so that the noise level $N(j)$ can be obtained.

Then, the noise level $N(j)$ is subtracted from the pixel values of the pixels of interest of the slice images $IMG_1$ to $IMG_6$, so that pixel values after the correction can be obtained.

The noise removal in the gating camera 20 is as described above. Advantages of the gating camera 20 according to the present embodiment will be clarified by comparison with a comparative technique.

In the comparative technique, apart from capturing the N slice images, an exposure is performed in the image sensor 24 without light emitted from the illumination device 22, and the background noise is imaged. In the comparative technique, imaging N+1 times is required for one imaging cycle, which lengthens an imaging period.

Regarding this, according to the present embodiment, the noise level can be obtained in parallel with normal imaging N times without performing imaging for measuring the noise level, and thus, the imaging period can be prevented from becoming longer.

(Embodiment 2.2)

In Embodiment 2.1, for each pixel of interest, the valid image is detected from the plurality of slice images $IMG_1$ to $IMG_N$, and the noise level is detected based on the pixel values of the pixels of interest of other invalid images. In Embodiment 2.2, the noise level is detected without detecting the valid image.

The configuration of the gating camera 20 according to Embodiment 2.2 is the same as that in the block diagram of Fig. 9, and the processing of the image processing device 28 is different from that in Embodiment 2.1. The noise removal processing in Embodiment 2.2 will be described below.

The image processing device 28 detects the noise level N(j) based on the pixel values of the pixels of interest of all the slice images $IMG_1$ to $IMG_N$. Then, the pixel values of the pixels of interest of the plurality of slice images are corrected based on the noise level N(j).

If the exposure times for all ranges are equal, the noise level N(j) may be calculated using Formula (3).

$$N(j) = \Sigma_k{}^{k=1:N}IMG_k(j)/N \ (3)$$

The correction may be performed by subtracting the noise level N(j) from the slice image $IMG_k(j)$. The pixel value of the corrected slice image $IMG_k'(j)$ is expressed by Formula (4). Formula (4) is the same as Formula (2).

$$IMG_k'(j) = IMG_k(j) - N(j) \ (4)$$

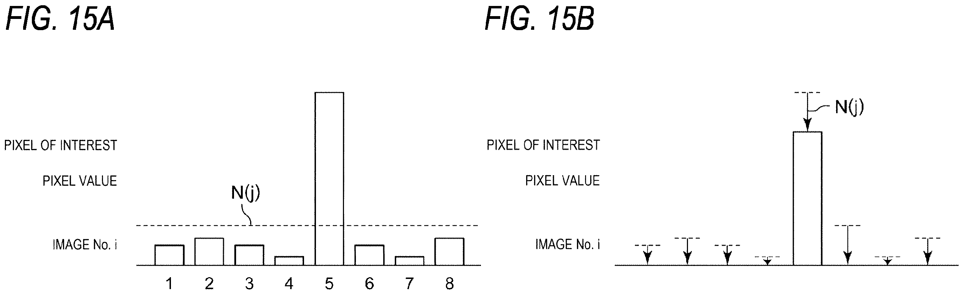

Fig. 15A and Fig. 15B are diagrams illustrating correction processing according to Embodiment 2.2. Fig. 15A is a diagram showing the pixel values before the correction of the pixels of interest of N slice images $IMG_1$ to $IMG_N$, and Fig. 15B is a diagram showing the pixel values after the correction. Here, N = 8.

The above is the correction processing according to Embodiment 2.2. According to the correction processing in Embodiment 2.2, similar to Embodiment 2.1, since the exposure for detecting the noise level is unnecessary, the imaging period can be shortened.

In Embodiment 2.2, since there is no need to detect the valid image, a computational load of the image processing device 28 can be reduced compared to Embodiment 2.1. On the other hand, in Embodiment 2.2, the reflected light from the object is also treated as a noise component, and thus, a detection accuracy of the noise level is inferior to that in Embodiment 2.1, but when the number N of ranges is large, the noise level can be detected with necessary and sufficient accuracy.

Modifications related to Embodiments 2.1 and 2.2 will be described.

(Modification 2.1)

Modification 2.1 related to Embodiment 2.1 will be described. In the above description, the valid image is the slice image having the maximum value in the pixels of interest, but the present invention is not limited thereto. For example, a predetermined threshold may be set in advance, and a slice image in which a pixel value of a pixel of interest exceeds the threshold may be treated as the valid image. In this case, a plurality of valid images may exist. In the method described in Embodiment 2.1, the valid images cannot be determined until the N slice images $IMG_1$ to $IMG_N$ are captured, and Modification 2.1 has an advantage that the noise level calculation processing can be executed without waiting for the completion of capturing the N slice images $IMG_1$ to $IMG_N$.

(Modification 2.2)

In Embodiment 2.1, when the noise level of the pixel of interest is calculated, simple averaging is used, but the calculation method is not limited thereto. The simple averaging is effective if all ranges have the same length in the depth direction, in other words, when the exposure times are the same, and if the exposure time differs for each range, a weighted average value weighted by coefficients corresponding to the exposure times may be obtained.

An exposure time in the i-th range is set as $T_j$. The noise level in Embodiment 2.1 may be calculated based on Formula (5). The noise level represents an amount of noise per unit exposure time.

$$N(j) = \{\Sigma_k{}^{k \neq M}IMG_k(j)/T_k\}/(N-1) \ (5)$$

The correction processing may perform based on Formula (6).

$$IMG_k'(j) = IMG_k(j) - N(j) \cdot T_k \ (6)$$

(Modification 2.3)

In Embodiment 2.2, if the exposure time $T_j$ differs for each range, the noise level N(j) may be calculated based on Formula (7).

$$N(j) = \{\Sigma_k{}^{k=1:N}IMG_k(j)/T_k\}/N \ (7)$$

The correction processing may perform based on Formula (8).

$$IMG_k'(j) = IMG_k(j) - N(j) \cdot T_k \ (8)$$

(Modification 2.4)

In Modification 2.2 or 2.3, the valid image $IMG_M$ is first detected and then the correction processing is performed by weighting, but the present invention is not limited thereto. First, all the pixels of the slice images $IMG_1$ to $IMG_N$ may be corrected with a coefficient $A_i$ (proportional to $T_i^{-1}$) according to the exposure time $T_i$ as shown in Formula (9).

$$IMG_i'' = A_i \times IMG_i \ (9)$$

In the case of Embodiment 2.1, regarding the corrected slice images $IMG_1''$ to $IMG_N''$, the valid image may be detected for each pixel of interest, and the noise level may be calculated based on Formula (1').

$$N(j) = \Sigma_k^{k \neq m} IMG_k''(j)/(N - 1) \ (1')$$

In the case of Embodiment 2.2, the noise level may be calculated based on Formula (3').

$$N(j) = \Sigma_k^{k = 1:N} IMG_k''(j)/N \ (3')$$

The correction processing may perform based on Formula (10).

$$IMG_k'(j) = IMG_k(j)'' - N(j) \ (10)$$

(Modification 2.5)

Ideally, an object contained in a range appears only in the corresponding slice image, but in reality, the object may also appear in slice images in ranges adjacent to that range. Therefore, in addition to the slice image having the maximum pixel value in the pixels of interest, one (or two) adjacent slice image(s) may be used as the valid images. In this case, (N-2) slice images (or N-3 slice images) other than the above slice images are processed as the invalid images.

(Modification 2.6)

In Embodiment 2.1, the noise level is calculated based on pixel values of valid pixels of the N-1 invalid images other than the valid image, but the present invention is not limited thereto. For example, the maximum and minimum values are excluded from the pixel values of the valid pixels of the N-1 invalid images, the noise level may be calculated based on the remaining N-3 pixel values.

The same is for Embodiment 2.2, the maximum and minimum values are excluded from the pixel values of the valid pixels of all the slice images, and the noise level may be calculated based on the remaining (N-2) pixel values.

(Modification 2.7)

Furthermore, the noise level calculation method is not limited to the averaging. For example, in Embodiment 2.1, the noise level may be a median value of the pixel values of the pixels of interest in the invalid images. In Embodiment 2.2, the noise level may be the median value of the pixel values of the pixels of interest of all the slice images.

(Modification 2.8)

In the above description, the noise level is detected by using all the pixels in order as the pixels of interest, but the present invention is not limited thereto, a slice image may be divided into a plurality of areas, one pixel of interest may be selected for each area, the noise level is detected, and pixels within the same area may be corrected using the common noise level.

(Modification 2.9)

The noise removal processing described above may be performed only in a situation where the influence of the sunlight cannot be ignored, and the noise removal processing may be omitted at night when there is no influence of the sunlight, or on cloudy days.

(Modification 2.10)

In the above description, the gating camera 20 is assumed to be used during the daytime and nighttime, but an application of the noise removal processing according to the present invention is not limited thereto, and can also be applied to the gating camera 20 that is used only during the nighttime.

(Embodiment 3)

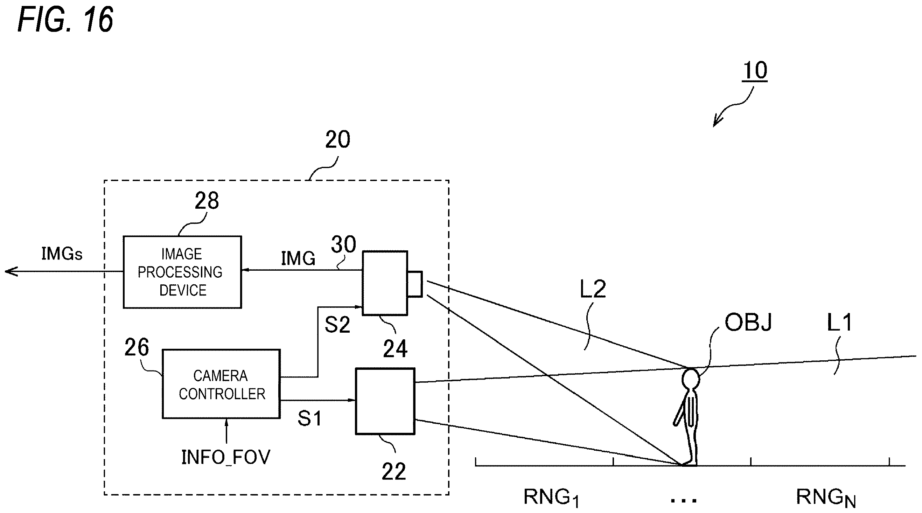

Fig. 16 is a block diagram of the sensing system 10 according to Embodiment 3. The sensing system 10 is mounted on a vehicle such as an automobile or a motorcycle, and detects the object OBJ present around the vehicle.

The sensing system 10 mainly includes the gating camera 20. The gating camera 20 includes the illumination device 22, the image sensor 24, the camera controller 26, and the image processing device 28. Imaging performed by the gating camera 20 is performed by dividing the field of view into the plurality of N ($N \geq 2$) ranges $RNG_1$ to $RNG_N$ in the depth direction. The adjacent ranges may overlap each other in the depth direction at boundaries of the ranges.

The illumination device (light projector) 22 irradiates the front of the vehicle with the probe light L1 in synchronization with the light emission timing signal S1 supplied from the camera controller 26. The probe light L1 is preferably infrared light, but is not limited thereto, and may be visible light having a predetermined wavelength. As the illumination device 22, for example, a laser diode (LD) or an LED can be used.

The image sensor 24 can perform the exposure control in synchronization with the exposure timing signal S2 supplied from the camera controller 26, and is configured to generate the slice image IMG. The image sensor 24 has a sensitivity to the same wavelength as that of the probe light L1, and images the reflected light (return light) L2 reflected by the object OBJ.

The camera controller 26 changes the light emission timing signal S1 and the exposure timing signal S2 for each range RNG to change the time difference between the light emission performed by the illumination device 22 and the exposure of the image sensor 24. The light emission timing signal S1 defines the timing of starting the light emission and the light emission time. The exposure timing signal S2 defines the timing of starting the exposure (time difference from the light emission) and the exposure time.

The gating camera 20 generates the plurality of slice images $IMG_1$ to $IMG_N$ corresponding to the plurality of ranges $RNG_1$ to $RNG_N$. Only an object contained in the corresponding range $RNG_i$ appears in the i-th slice image $IMG_i$.

The image processing device 28 can be implemented by a combination of a processor (hardware) such as a central processing unit (CPU), a micro processing unit (MPU), a microcomputer, or a graphics processing unit (GPU), and a software program executed by the processor (hardware). The image processing device 28 may be implemented by only hardware. The image processing device 28 processes the image generated by the image sensor 24 and outputs a final slice image. When an output from the image sensor 24 is directly used as the slice image, the image processing device 28 can be omitted.

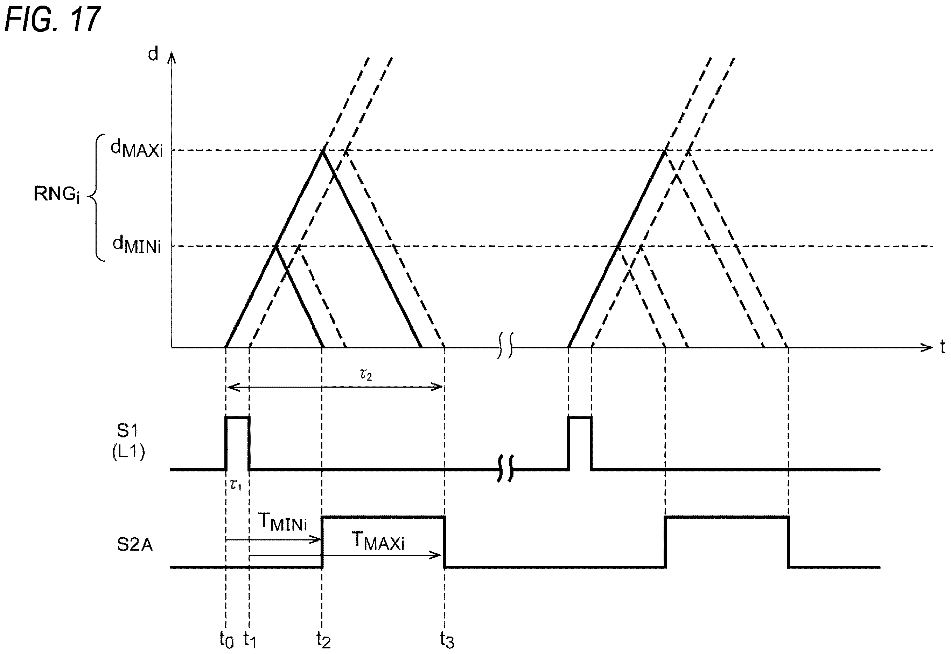

Fig. 17 is a diagram illustrating an operation of the gating camera 20. Fig. 17 shows a state where the i-th range $RNG_i$ is measured. The illumination device 22 emits the light during the light emission period $\tau_1$ between the time points $t_0$ and $t_1$ in synchronization with the light emission timing signal S1. An uppermost stage shows a diagram of light beams in which a horizontal axis represents a time and a vertical axis represents a distance. The distance from the gating camera 20 to the near side boundary of the range $RNG_i$ is set as the $d_{MINi}$, and the distance from the gating camera 20 to the far side boundary of the range $RNG_i$ is set as $d_{MAXi}$.

The round trip time $T_{MINi}$ until the light emitted from the illumination device 22 at a time point reaches the distance $d_{MINi}$ and then the reflected light of the light returns to the image sensor 24 is $T_{MINi} = 2 \times d_{MINi}/c$. c is the speed of light.

Similarly, the round trip time $T_{MAXi}$ until the light emitted from the illumination device 22 at a time point reaches the distance $d_{MAXi}$ and then the reflected light of the light returns to the image sensor 24 is $T_{MAXi} = 2 \times d_{MAXi}/c$.

When it is desired to image only the object OBJ contained in the range $RNG_i$, the camera controller 26 generates the exposure timing signal S2 such that the exposure is started at the time point $t_2 = t_0 + T_{MINi}$ and the exposure is ended at the time point $t_3 = t_1 + T_{MAXi}$. This is one exposure operation.

When the i-th range $RNG_i$ is imaged, a plurality of times of exposure may be performed. In this case, the camera controller 26 may repeat a set of the above irradiation and exposure operations a plurality of times during the predetermined period $\tau_2$. The image sensor 24 outputs slice images integrated by performing the exposure a plurality of times.

In the present embodiment, the gating camera 20 optimizes a shutter speed (exposure time), the number of times of exposure, the sensitivity, an irradiation intensity of the probe light, and the like (imaging parameters) for each range so that variation in the exposure (a luminance value of an object image in the slice image) for each range does not occur.

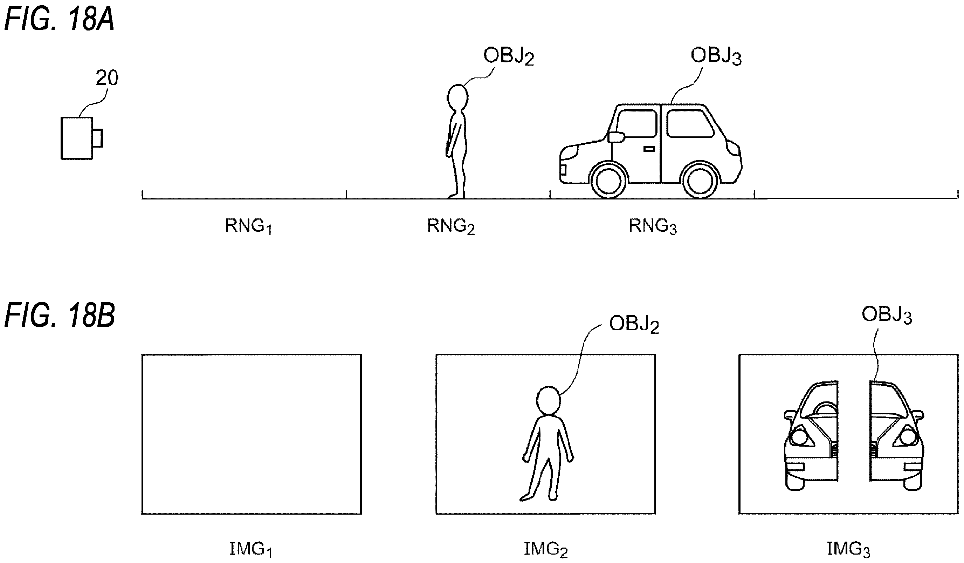

Fig. 18A and Fig. 18B are diagrams illustrating images obtained by the gating camera 20. In an example of Fig. 18A, the object (pedestrian) $OBJ_2$ is present in the range $RNG_2$, and the object (vehicle) $OBJ_3$ is present in the range $RNG_3$. Fig. 18B shows the plurality of slice images $IMG_1$ to $IMG_3$ obtained in the situation in Fig. 18A. When the slice image $IMG_1$ is captured, since the image sensor is exposed merely by the reflected light from the range $RNG_1$, no object image appears in the slice image $IMG_1$.

When the slice image $IMG_2$ is captured, since the image sensor is exposed merely by the reflected light from the range $RNG_2$, only the object image $OBJ_2$ appears in the slice image $IMG_2$. Similarly, when the slice image $IMG_3$ is captured, since the image sensor is exposed merely by the reflected light from the range $RNG_3$, only the object image $OBJ_3$ appears in the slice image $IMG_3$. As described above, according to the gating camera 20, it is possible to separately image an object for each range.

Reference is made back to Fig. 16, the processing in a situation where the visual field of the gating camera is poor will be described. The gating camera uses infrared light and the like as the probe light, and thus, the " visual field of the gating camera" does not necessarily match the quality of the visual field when seen by the eyes of a human. The visual field changes under an influence of weather such as fog and rain, and also changes due to factors such as dust.

In the present embodiment, visual field information INFO_FOV having a correlation with an attenuation coefficient $\sigma[m^{-1}]$ of the probe light is input to the camera controller 26. Formula (1) is constructed between the attenuation coefficient $\sigma$, a propagation distance r, and a transmittance T.

$$T = \exp(-\sigma r) \quad (1)$$

A method of generating the visual field information INFO_FOV is not particularly limited. For example, based on the image processing in the image processing device 28, the attenuation coefficient σ or the transmittance T may be calculated and used as the visual field information INFO_FOV.

A sensor provided separately from the gating camera 20 may measure or estimate the attenuation coefficient σ and the transmittance. Alternatively, a user may determine the quality of the visual field and give the visual field information INFO_FOV to the gating camera 20. Regarding visible light, visibility is known as an index of the quality of the visual field, and information corresponding to the visibility can be used as the visual field information INFO_FOV.

Alternatively, since the attenuation coefficient σ depends on an amount of rain and a density of fog, the amount of rain and the presence or absence (or density) of fog may be detected by a sensor or received from the user, and the detection result and the reception may be used as the visual field information INFO_FOV.

The camera controller 26 reflects the visual field information INFO_FOV with imaging parameters. Some examples of the control of the imaging parameters will be described.

(First Control Method)

The camera controller 26 changes the number of times of exposure for generating one slice image based on the visual field information INFO_FOV. Specifically, the number of times of exposure is increased as the attenuation coefficient σ is larger.

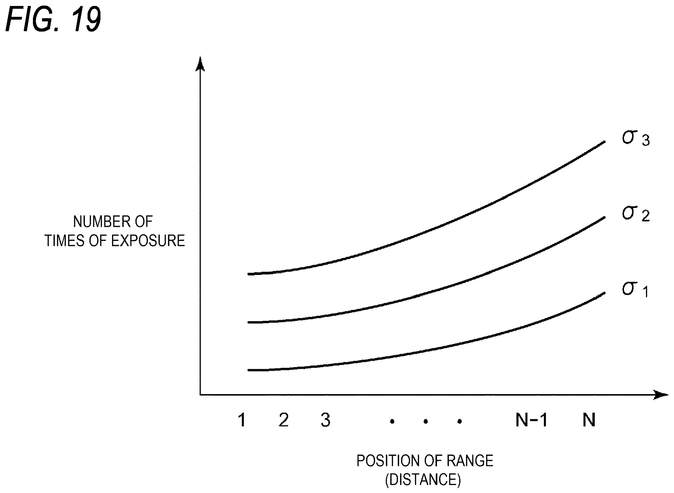

Fig. 19 is a diagram illustrating a first control method in the gating camera 20 in Fig. 16. A horizontal axis indicates a position of the range (range number), that is, a distance, and a vertical axis indicates the number of times of exposure. As the distance to the object increases, the distance r in Formula (1) increases and the transmittance T decreases, and thus, an intensity of light incident on the image sensor 24 decreases. In order to compensate for this, the imaging parameters are defined such that the farther the range, the greater the number of times of exposure.

In the present embodiment, a relation between the range number and the number of times of exposure is defined for each attenuation coefficient σ. In this example, the attenuation coefficient σ is expressed in three stages, and a relation, $\sigma_1 < \sigma_2 < \sigma_3$ is satisfied, and as the attenuation coefficient σ increases, the relation between the range number and the number of times of exposure shifts more upward. For example, the relation shown in Fig. 19 is stored in a nonvolatile manner in the camera controller 26 as a lookup table or an arithmetic expression, and the camera controller 26 determines the number of times of exposure based on one relation according to the visual field information INFO_FOV. Here, although the relation between the range number and the number of times of exposure is shown as a curve, the relation may be defined by a straight line or by a polygonal line.

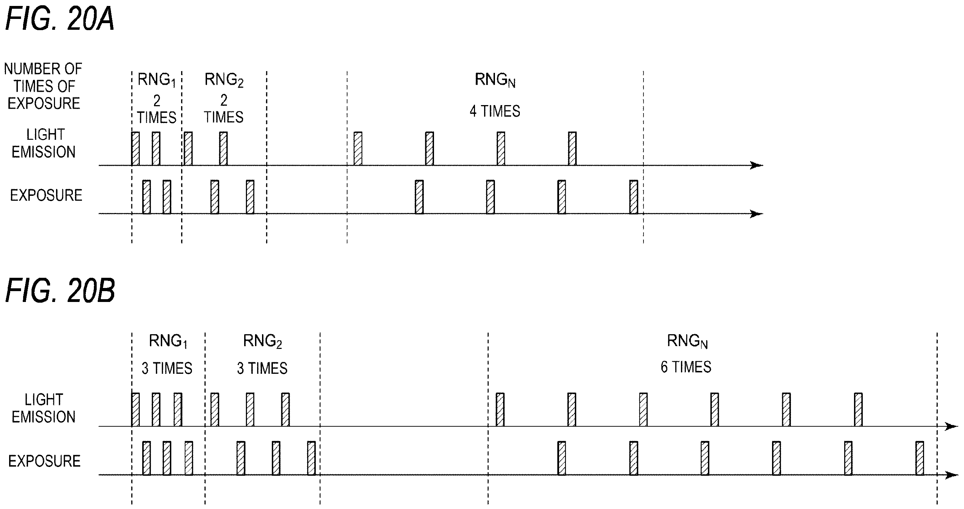

Fig. 20A and Fig. 20B are time charts showing operations in the first control method of the gating camera 20 in Fig. 16. Fig. 20A shows the operation when the visual field is good, that is, when the attenuation coefficient σ is small. In this example, the number of times of exposure for the first range $RNG_1$ and the second range $RNG_2$ is two, and the number of times of exposure for the N-th range $RNG_N$ is four. The closer the range, the shorter the time difference between the light emission and the exposure. Here, it is assumed that a light emission time interval is constant regardless of the range and the quality of the visual field (attenuation coefficient σ). The light emission time interval may differ for each range, and may differ according to the quality of the visual field.

Fig. 20B shows the operation when the visual field is poor, that is, when the attenuation coefficient σ is large. In this example, the number of times of exposure for the first range $RNG_1$ and the second range $RNG_2$ is increased from two to three, and the number of times of exposure for the N-th range $RNG_N$ is increased from four to six.

According to the first control method, under the condition of the poor visual field, the number of times of exposure can be increased to increase the total amount of light incident on the image sensor 24, so that an image with a quality as good as that obtained under a good visual field can be obtained.

A method of generating one slice image based on a plurality of exposures is not particularly limited. For example, when using the image sensor 24 capable of multiple exposures, one slice image can be generated by accumulating a total amount of light of the multiple exposures.

If the image sensor 24 does not support the multiple exposures, a raw image is generated for each exposure, and a plurality of raw images corresponding to a plurality of exposures in the subsequent image processing device 28 are synthesized, so that one slice image may be generated.

(Second Control Method)

In a second control method, the camera controller 26 changes a depth length of the range based on the visual field information INFO_FOV. Specifically, the length of the range is shortened as the attenuation coefficient σ is increased.

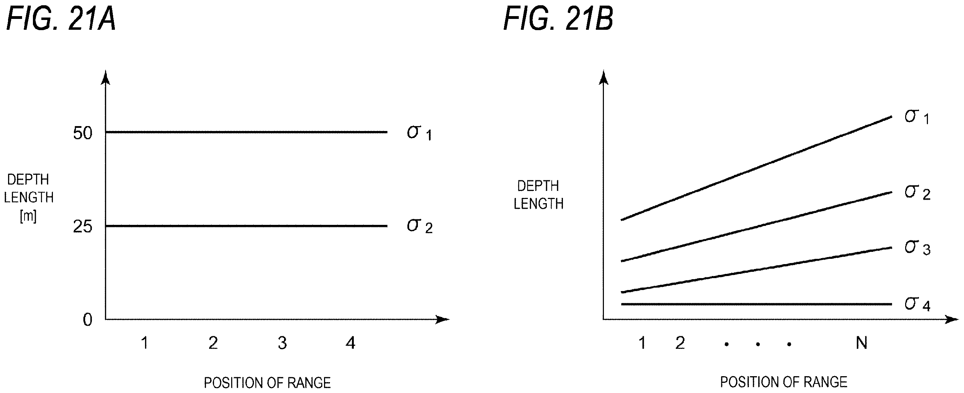

Fig. 21A and Fig. 21B are diagrams illustrating the second control method in the gating camera 20 in Fig. 16. A horizontal axis indicates a position of the range (range number), that is, a distance, and a vertical axis indicates the depth length of each range.

Fig. 21A shows a case where all the ranges have the same depth length. In this example, the depth length is controlled in two stages according to the attenuation coefficients σ, and N = 4. When the attenuation coefficient σ is small ($\sigma_1$), the depth of each range is 50 m. That is, the nearest range $RNG_1$ is 0 m to 50 m, the second range $RNG_2$ is 50 m to 100 m, the third range $RNG_3$ is 100 m to 150 m, and the fourth range $RNG_4$ is 150 m to 200 m.

When the attenuation coefficient σ is large ($\sigma_2$), the depth of each range is 25 m. That is, the nearest range $RNG_1$ is 0 m to 25 m, the second range $RNG_2$ is 25 m to 50 m, the third range $RNG_3$ is 50 m to 75 m, and the fourth range $RNG_4$ is 75 m to 100 m.

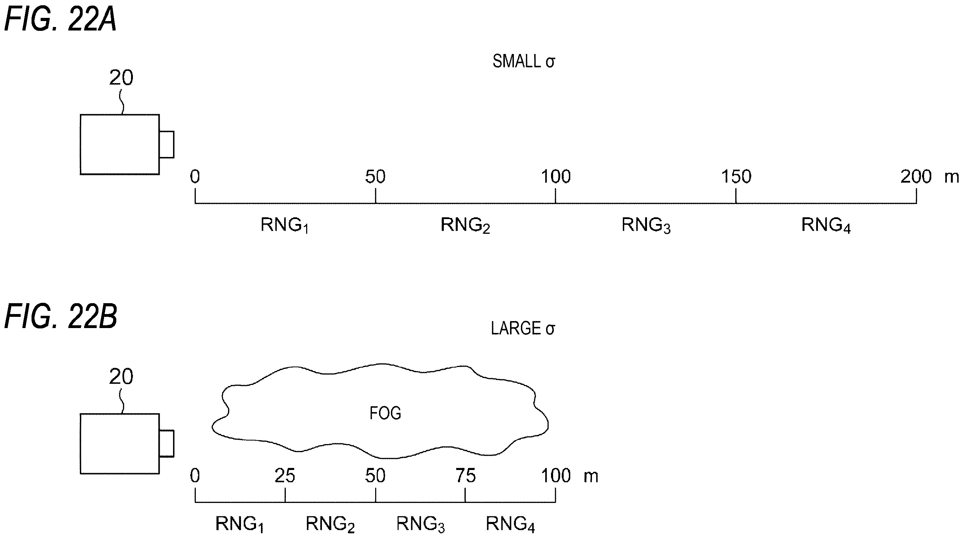

Fig. 22A and Fig. 22B are diagrams showing a plurality of ranges corresponding to the control in Fig. 21A. Fig. 22A shows the plurality of ranges under a good visual field condition where the attenuation coefficient σ is small. Fig. 22B shows the plurality of ranges under a poor visual field condition where fog happens and the attenuation coefficient σ is large.

As shown in Fig. 21B, the depth length may be different for each range. For example, the relation between the range number and the depth length may be determined for each of values $\sigma_1$, $\sigma_2$, $\sigma_3$, and $\sigma_4$ of the attenuation coefficient σ in advance, and the relation corresponding to the current attenuation coefficient may be selected.

In the second control method, if the attenuation coefficient σ is large, the length of each range can be shortened, and a resolution in the depth direction can be increased in exchange for giving up long-distance imaging.

Among the plurality of ranges, the depth lengths of some ranges may be kept constant, and the depth lengths of some ranges may be changed according to the attenuation coefficient σ.

(Third Control Method)

In a third control method, the camera controller 26 changes the number N of ranges as the measurement targets based on the visual field information INFO_FOV. Specifically, as the attenuation coefficient σ increases, the number of ranges as the measurement targets is decreased in order from the far side.

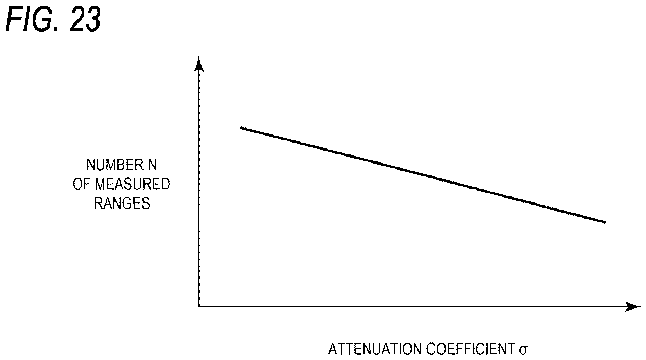

Fig. 23 is a diagram illustrating an operation according to the third control method of the gating camera 20 in Fig. 16. A horizontal axis indicates the attenuation coefficient σ, and a vertical axis indicates the number N of ranges as the measurement targets.

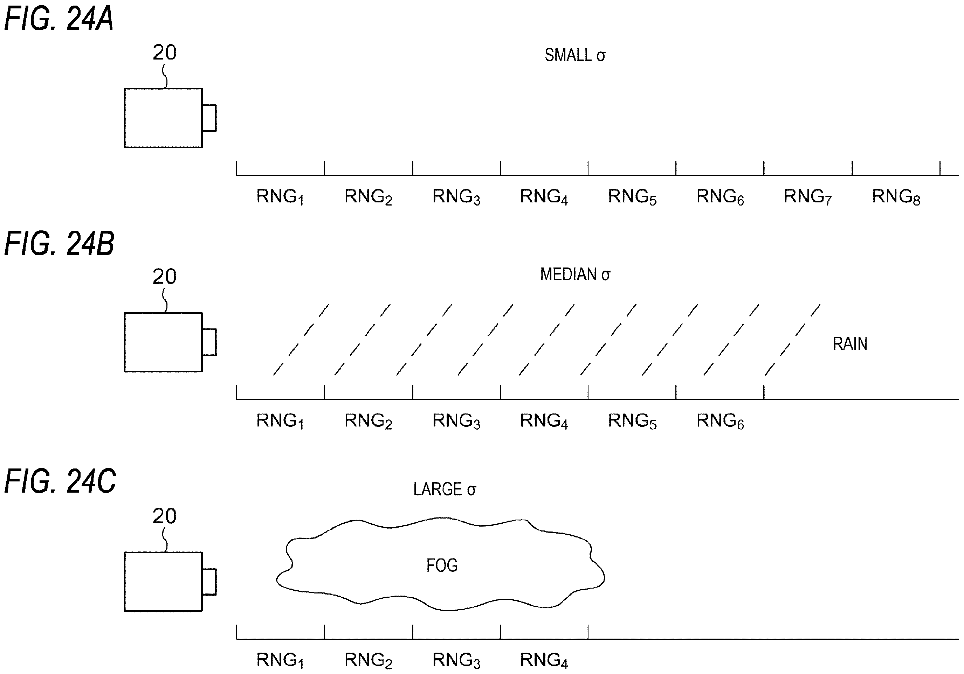

Figs. 24A to 24C are diagrams showing the plurality of ranges in the third control method. Here, it is assumed that all ranges have the same depth length. Fig. 24A shows a situation where the visual field is good, and the measurement is taken for N = 8 ranges. Fig. 24B shows a situation where it is raining and the visual field is slightly deteriorated, and the number of the ranges as the measurement targets is reduced to N = 6. Fig. 24C shows a situation where it is raining and the visual field is slightly deteriorated, and the number of the ranges as the measurement targets is reduced to N = 4.

In the third control method, if the attenuation coefficient σ is large, the long-distance imaging is given up, and short-distance sensing is concentrated. Accordingly, in a situation where the visual field is poor, the long-distance imaging, which requires the exposure for many times and takes a long time to sense, can be omitted, and thus, a frame rate of a slice image in a close range can be increased.

The first control method to the third control method may be used alone or may be combined freely.

The use of the gating camera 20 described above will be described.

(Use)

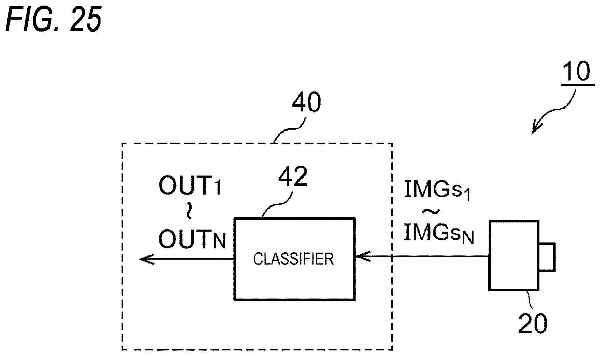

Fig. 25 is a block diagram of the sensing system 10. The sensing system 10 includes an arithmetic processing device 40 in addition to the gating camera 20 described above. The sensing system 10 is an object detection system which is mounted on a vehicle such as an automobile or a motorcycle, and determines a type (also referred to as category or class) of the object OBJ present around the vehicle.

The gating camera 20 generates the plurality of slice images $IMGs_1$ to $IMGs_N$ corresponding to the plurality of ranges $RNG_1$ to $RNG_N$. In the i-th slice image $IMGs_i$, only the object contained in the corresponding range $RNG_i$ is imaged.

The arithmetic processing device 40 is configured to identify the type of the object based on the plurality of slice images $IMGs_1$ to $IMGs_N$ corresponding to the plurality of ranges $RNG_1$ to $RNG_N$ obtained by the gating camera 20. The arithmetic processing device 40 includes a classifier 42 implemented based on a learned model generated by machine learning. The arithmetic processing device 40 may include a plurality of classifiers 42 optimized for each range. An algorithm of the classifier 42 is not particularly limited, and you only look once (YOLO), single shot multibox detector (SSD), region-based convolutional neural network (RCNN), spatial pyramid pooling (SPPnet), Faster R-CNN, deconvolution-SSD (DSSD), Mask R-CNN, or the like can be adopted, or an algorithm developed in the future can be adopted.

The arithmetic processing device 40 can be implemented by a combination of a processor (hardware) such as a central processing unit (CPU), a micro processing unit (MPU), or a microcomputer, and a software program executed by the processor (hardware). The arithmetic processing device 40 may be a combination of a plurality of processors. Alternatively, the arithmetic processing device 40 may be implemented merely by hardware. A function of the arithmetic processing device 40 and the function of the image processing device 28 may be implemented in the same processor.

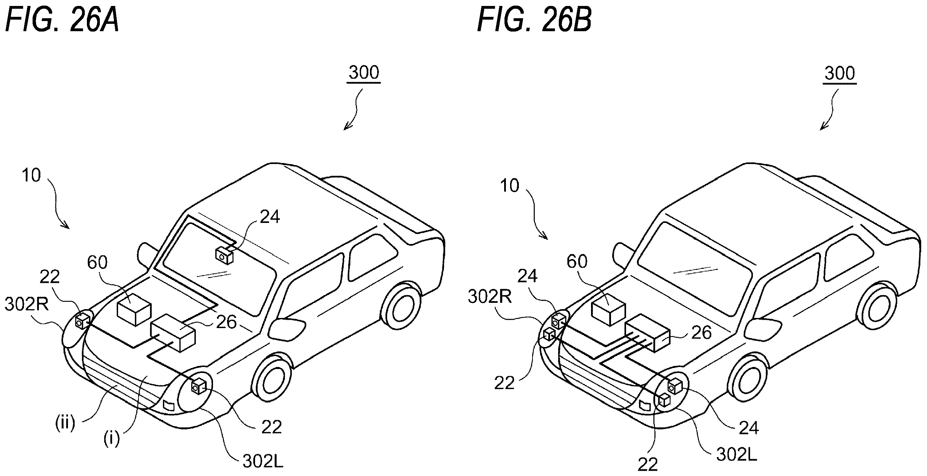

Fig. 26A and Fig. 26B are diagrams showing an automobile 300 including the gating camera 20. Reference is made to Fig. 26A. The automobile 300 includes headlamps (lamps) 302L and 302R.

As shown in Fig. 26A, the illumination device 22 of the gating camera 20 is built in at least one of the left and right headlamps 302L and 302R. The image sensor 24 can be attached to a part of the vehicle, for example, on a back side of the rear-view mirror. Alternatively, the image sensor 24 may be provided at a front grille or a front bumper. The camera controller 26 may be provided in a vehicle interior, may be provided in an engine compartment, or may be built in the headlamps 302L and 302R.

As shown in Fig. 26B, the image sensor 24 and the illumination device 22 may be built in any one of the left and right headlamps 302L and 302R.

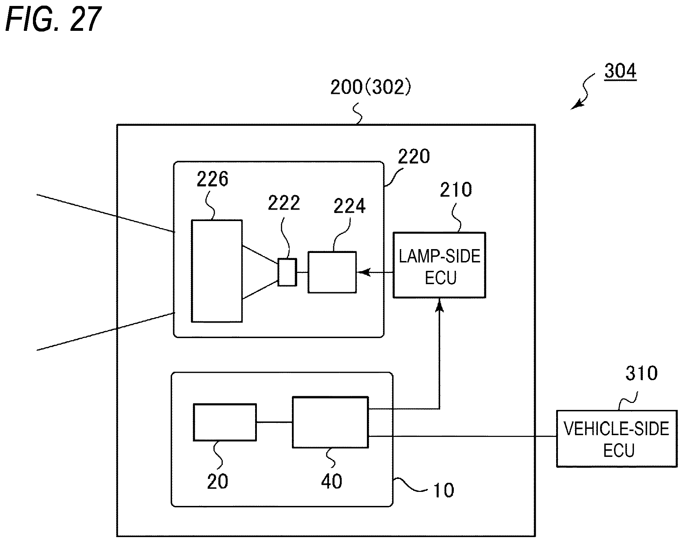

Fig. 27 is a block diagram showing the vehicle lamp 200 including the sensing system 10. The vehicle lamp 200 and a vehicle-side ECU 310 constitutes a lamp system 304. The vehicle lamp 200 includes a lamp-side ECU 210 and a lamp unit 220. The lamp unit 220 is a low beam or high beam, and includes a light source 222, a lighting circuit 224, and an optical system 226. Further, the vehicle lamp 200 is provided with the sensing system 10.

Information on the object OBJ detected by the sensing system 10 may be used for light distribution control of the vehicle lamp 200. Specifically, the lamp-side ECU 210 generates an appropriate light distribution pattern based on the information on a type and a position of the object OBJ which is generated by the sensing system 10. The lighting circuit 224 and the optical system 226 operate so as to obtain the light distribution pattern generated by the lamp-side ECU 210. The arithmetic processing device 40 of the sensing system 10 may be provided outside the vehicle lamp 200, that is, on the vehicle side.

The information on the object OBJ detected by the sensing system 10 may be transmitted to the vehicle-side ECU 310. The vehicle-side ECU 310 may use the information for automated driving and driving assistance.

Although the present invention has been described using specific words and phrases based on the embodiments, the embodiments merely show one aspect of principles and applications of the present invention, and many modifications and changes in arrangement can be made in the embodiment without departing from the spirit of the present invention defined in the claims.

INDUSTRIAL APPLICABILITY

The present disclosure relates to a gating camera.

REFERENCE SIGNS LIST

10: sensing system
20: gating camera
22: illumination device
24: image sensor
26: camera controller
28: image processing device
40: arithmetic processing device
42: classifier
200: vehicle lamp
210: lamp-side ECU
220: lamp unit
222: light source
224: lighting circuit
226: optical system
300: automobile
302L: headlamp
304: lamp system
310: vehicle-side ECU
L1: probe light
S1: light emission timing signal
S2: exposure timing signal

**Claims**

1. A gating camera for dividing a field of view into a plurality of ranges in a depth direction and generating a plurality of slice images corresponding to the plurality of ranges, the gating camera comprising:

   an illumination device configured to radiate probe light;
   an image sensor configured to generate a raw image by an exposure and output a compressed image obtained by compressing image information related to, among a plurality of lines constituting the raw image, an invalid line that does not contain a target;
   a camera controller configured to control a light emission timing of the illumination device and an exposure timing of the image sensor; and
   an image processing device configured to receive the compressed image from the image sensor and decompress the slice image.

2. The gating camera according to claim 1, wherein when pixel values of all pixels in a line are smaller than a predetermined threshold, the image sensor sets the line as an invalid line.

3. The gating camera according to claim 1 or 2, wherein in the slice image, the invalid line has a pixel value of zero.

4. The gating camera according to any one of claims 1 to 3, wherein
the image sensor is configured to:

with respect to a valid line which is not the invalid line, transmit line data including a line number, a header whose value is a first value, and pixel values of all pixels included in the valid line, and with respect to the invalid line, transmit line data including a line number and a header whose value is a second value.

5. The gating camera according to claim 4, wherein when the value of the header of the received line data is the second value, the image processing device sets all pixel values of the line to 0.

6. A gating camera for dividing a field of view into a plurality of ranges in a depth direction and generating a plurality of slice images corresponding to the plurality of ranges, the gating camera comprising:

an illumination device configured to radiate probe light;
an image sensor;
a camera controller configured to control a light emission timing of the illumination device and an exposure timing of the image sensor, and cause the image sensor to generate the plurality of slice images corresponding to the plurality of ranges; and
an image processing device configured to receive the plurality of slice images from the image sensor, select a pixel of interest, set a slice image containing an object in the pixel of interest as a valid image, detect a noise level based on pixel values of pixels of interest in the slice images other than the valid image, and correct the pixel value of the pixel of interest in each of the plurality of slice images based on the noise level.

7. The gating camera according to claim 6, wherein the noise level is an average value of the pixel values of the pixels of interest in the slice images other than the valid image.

8. The gating camera according to claim 6 or 7, wherein the image processing device sets the slice image with the largest pixel value of the pixel of interest as the valid image.

9. The gating camera according to claim 6 or 7, wherein when a pixel value of a pixel of interest of a slice image exceeds a predetermined threshold, the image processing device sets the slice image as the valid image.

10. A gating camera for dividing a field of view into a plurality of ranges in a depth direction and generating a plurality of slice images corresponding to the plurality of ranges, the gating camera comprising:

an illumination device configured to radiate probe light;
an image sensor;
a camera controller configured to control a light emission timing of the illumination device and an exposure timing of the image sensor, and cause the image sensor to generate the plurality of slice images corresponding to the plurality of ranges; and
an image processing device configured to receive the plurality of slice images from the image sensor, select a pixel of interest, detect a noise level based on pixel values of pixels of interest in all the slice images, and correct the pixel value of the pixel of interest in each of the plurality of slice images based on the noise level.

11. The gating camera according to claim 10, wherein the noise level is an average value of the pixel values of the pixels of interest in all the slice images.

12. A gating camera for dividing a field of view into a plurality of ranges in a depth direction and generating a plurality of slice images corresponding to the plurality of ranges, the gating camera comprising:

an illumination device configured to radiate probe light;
an image sensor; and
a camera controller configured to control a light emission timing of the illumination device and an exposure timing of the image sensor, and cause the image sensor to generate plural pieces of image data corresponding to the plurality of ranges, wherein
the camera controller reflects, in an imaging parameter, visual field information having a correlation with an attenuation coefficient of the probe light.

13. The gating camera according to claim 12, wherein the camera controller increases the number of times of exposure for generating one slice image as the attenuation coefficient of the probe light increases.

14. The gating camera according to claim 13, wherein the camera controller holds a plurality of relations between range numbers and the number of times of exposure, and selects one relation according to the visual field information.

15. The gating camera according to any one of claims 12 to 14, wherein
if the attenuation coefficient is large, the camera controller increases a resolution in the depth direction in exchange for giving up long-distance imaging.

16. The gating camera according to any one of claims 12 to 15, wherein
the camera controller shortens a length of one range as the attenuation coefficient increases.

17. The gating camera according to any one of claims 12 to 16, wherein
the camera controller decreases the number of ranges as measurement targets sequentially from a far side as the attenuation coefficient increases.

18. A control method of a gating camera which includes an illumination device configured to radiate probe light and an image sensor, and divides a field of view in a depth direction into a plurality of ranges to capture an image, the control method comprising:

a step of acquiring visual field information having a correlation with a transmittance of the probe light in the field of view;
a step of determining an imaging parameter based on the visual field information; and
a step of controlling the illumination device and the image sensor according to the imaging parameter.

19. A vehicle sensing system, comprising:

the gating camera according to any one of claims 1 to 17; and
an arithmetic processing device configured to process the plurality of slice images captured by the gating camera.

20. A vehicle lamp, comprising:
the gating camera according to any one of claims 1 to 17.

## FIG. 1

FIG. 2

EP 4 184 242 A1

*FIG. 3A*

20 (24A)

OBJ₂

OBJ₃

RNG₁            RNG₂            RNG₃

*FIG. 3B*

OBJ₂

OBJ₃

IMG₁            IMG₂            IMG₃

## FIG. 4

RNG<sub>i</sub>

FIG. 5A

IMG_RAW$_i$

$Y_U$

$Y_M$

$Y_L$

FIG. 5B

IMG_COMP$_i$

FIG. 5C

IMGs$_i$

0

0

# FIG. 6

```
        ┌─────────────┐
        │    START    │
        └──────┬──────┘
               │
        ┌──────┴──────┐
        │    i = 1    │──── S100
        └──────┬──────┘
               │
S102    ┌──────┴──────┐
┄┄┄┄┄┄┄┄│      i      │──── S102
        └──────┬──────┘
               │
    ┌──────────┴──────────┐
    │ IMAGE i-th RANGE RNGᵢ AND │──── S104
    │   GENERATE IMG_RAWᵢ   │
    └──────────┬──────────┘
               │
        ┌──────┴──────┐
        │    j = 1    │──── S106
        └──────┬──────┘
               │
S108    ┌──────┴──────┐
┄┄┄┄┄┄┄┄│      j      │──── S108
        └──────┬──────┘
               │
            ◇ S110
  ALL PIXELS ON
  j-th LINE OF IMG_RAWᵢ ARE SMALLER ──Y──┐
  THAN THRESHOLD?                        │
            │N                           │
   ┌────────┴────────┐ S110     ┌────────┴────────┐ S112
   │ DETERMINE AS VALID LINE │  │ DETERMINE AS INVALID LINE │
   └────────┬────────┘        └────────┬────────┘
            │◄──────────────────────────┘
      ┌─────┴─────┐
      │   j ++    │──── S114
      └─────┬─────┘
      ┌─────┴─────┐
      │  j > Yₘₐₓ  │──── S116
      └─────┬─────┘
      ┌─────┴─────┐
      │   i ++    │──── S118
      └─────┬─────┘
      ┌─────┴─────┐
      │   i > N   │──── S120
      └─────┬─────┘
       ┌────┴────┐
       │   END   │
       └─────────┘
```

$i = 1$ — S100

$i$ — S102

IMAGE i-th RANGE $RNG_i$ AND GENERATE $IMG\_RAW_i$ — S104

$j = 1$ — S106

$j$ — S108

ALL PIXELS ON j-th LINE OF $IMG\_RAW_i$ ARE SMALLER THAN THRESHOLD? — S110

DETERMINE AS VALID LINE — S110

DETERMINE AS INVALID LINE — S112

$j\ ++$ — S114

$j > Y_{MAX}$ — S116

$i\ ++$ — S118

$i > N$ — S120

## FIG. 7A

IMG_COMP

$LD_1$
$LD_2$
$LD_3$

$LD_{VMAX}$

## FIG. 7B

52  54  56  50

VALID LINE  | LINE No | 1 | | | . . . . | |

INVALID LINE | LINE No | 0 |  50'

52  54

EP 4 184 242 A1

*FIG. 8*

*FIG. 9*

*FIG. 10*

EP 4 184 242 A1

*FIG. 11A*

*FIG. 11B*

# *FIG. 12*

START

j = 1 — S100

j — S102

DETECT VALID IMAGE IMG$_M$ BASED ON IMG$_1$(j) TO IMG$_N$(j) — S104

CALCULATE NOISE LEVEL N(j) BASED ON PIXELS IMG$_1$(j) TO IMG$_{M-1}$(j) AND IMG$_{M+1}$(j) TO IMG$_N$(j) OF IMAGES OTHER THAN VALID IMAGE IMG$_M$ — S106

i = 1 — S108

i — S110

IMG$_i$(j) = IMG$_i$(j)−N(j) — S112

i++ — S114

i > N

j++ — S116

j > (X*Y)

END

## FIG. 13

EP 4 184 242 A1

## FIG. 14A

PIXEL OF INTEREST

PIXEL VALUE

N(j)

IMAGE No. i

1  2  3  4  5  6

INVALID
IMAGE

VALID
IMAGE

INVALID
IMAGE

## FIG. 14B

PIXEL OF INTEREST

PIXEL VALUE

N(j)

IMAGE No. i

1  2  3  4  5  6

EP 4 184 242 A1

# FIG. 15A

PIXEL OF INTEREST

PIXEL VALUE

N(j)

IMAGE No. i

1  2  3  4  5  6  7  8

# FIG. 15B

PIXEL OF INTEREST

PIXEL VALUE

N(j)

IMAGE No. i

EP 4 184 242 A1

FIG. 16

FIG. 17

## FIG. 18A

RNG₁　　　　RNG₂　　　　RNG₃

## FIG. 18B

IMG₁　　　　IMG₂　　　　IMG₃

*FIG. 19*

NUMBER OF
TIMES OF EXPOSURE

$\sigma_3$

$\sigma_2$

$\sigma_1$

1   2   3   •  •  •   N-1   N

POSITION OF RANGE
(DISTANCE)

# FIG. 20A

| NUMBER OF TIMES OF EXPOSURE | RNG$_1$ 2 TIMES | RNG$_2$ 2 TIMES | RNG$_N$ 4 TIMES |
|---|---|---|---|

LIGHT EMISSION

EXPOSURE

# FIG. 20B

| | RNG$_1$ 3 TIMES | RNG$_2$ 3 TIMES | RNG$_N$ 6 TIMES |
|---|---|---|---|

LIGHT EMISSION

EXPOSURE

EP 4 184 242 A1

FIG. 21A

FIG. 21B

EP 4 184 242 A1

## FIG. 22A

SMALL σ

20

| 0 | 50 | 100 | 150 | 200 m |
|---|---|---|---|---|
| RNG₁ | RNG₂ | RNG₃ | RNG₄ | |

## FIG. 22B

LARGE σ

20

FOG

| 0 | 25 | 50 | 75 | 100 m |
|---|---|---|---|---|
| RNG₁ | RNG₂ | RNG₃ | RNG₄ | |

FIG. 23

NUMBER N
OF MEASURED
RANGES

ATTENUATION COEFFICIENT σ

## FIG. 24A

20

SMALL σ

RNG₁  RNG₂  RNG₃  RNG₄  RNG₅  RNG₆  RNG₇  RNG₈

## FIG. 24B

20

MEDIAN σ

RAIN

RNG₁  RNG₂  RNG₃  RNG₄  RNG₅  RNG₆

## FIG. 24C

20

LARGE σ

FOG

RNG₁  RNG₂  RNG₃  RNG₄

*FIG. 25*

FIG. 26A

FIG. 26B

EP 4 184 242 A1

FIG. 27

200(302)

304

220

226

222    224

210

LAMP-SIDE
ECU

310

VEHICLE-SIDE
ECU

20    40

10

# INTERNATIONAL SEARCH REPORT

| | International application No. |
|---|---|
| | **PCT/JP2021/025500** |

**A. CLASSIFICATION OF SUBJECT MATTER**

*G03B 15/03*(2021.01)n; *G03B 15/05*(2021.01)n; *H04N 5/225*(2006.01)n; *H04N 5/232*(2006.01)n; *G01S 17/18*(2020.01)i; *G01S 17/894*(2020.01)i; *G01S 17/931*(2020.01)i

FI: G01S17/18; G01S17/894; G01S17/931; G03B15/03 V; G03B15/05; H04N5/225 600; H04N5/232; H04N5/232 290

According to International Patent Classification (IPC) or to both national classification and IPC

**B. FIELDS SEARCHED**

Minimum documentation searched (classification system followed by classification symbols)

G03B15/03; G03B15/05; H04N5/225; H04N5/232; G01S17/18; G01S7/48-7/51; G01S17/00-17/95

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-282906 A (CALSONIC KANSEI CORPORATION) 03 December 2009 (2009-12-03) entire text, all drawings (Family: none) | 1-20 |
| A | JP 2010-071704 A (CALSONIC KANSEI CORPORATION) 02 April 2010 (2010-04-02) entire text, all drawings (Family: none) | 1-20 |
| A | CN 110018493 A (XI'AN INSTITUTE OF OPTICS AND PRECISION MECHANICS OF CAS) 16 July 2019 (2019-07-16) entire text, all drawings (Family: none) | 1-20 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 September 2021** | **28 September 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

| International application No. |
|---|
| **PCT/JP2021/025500** |

| Box No. III      Observations where unity of invention is lacking (Continuation of item 3 of first sheet) |
|---|

This International Searching Authority found multiple inventions in this international application, as follows:

A; The number of inventions included in the claims is 5. The inventions are classified as below.
B; (Invention 1) claims 1-5, 19, and 20
     (Invention 2) Claims 6-9
     (Invention 3) Claims 10 and 11
     (Invention 4) Claims 12-17
     (Invention 5) Claim 18
C; First of all, a special technical feature (hereinafter, referred to as "STF") is found in the invention in claim 1 (having all matters specifying the invention) classified as (invention 1).

Next, the inventions classified as (invention 2)-(invention 5) would be obvious to a person skilled in the art even at first glance, and each of the independent claims does not have a SFT identical or corresponding to that of the claims classified as (invention 1). Also, the common technical feature between these inventions is merely a well-known feature in light of, for example, the disclosure of [Document 1: JP 2009-282906 A (CALSONIC KANSEI CORPORATION)] or as instructed in the specification by the applicant.

Also, these inventions cannot be classified as (invention 1) and are thus classified as (invention 2)-(invention 5).
However, (invention 2)-(invention 5) could be examined without requiring additional examination fees.

1. ☐   As all required additional search fees were timely paid by the applicant, this international search report covers all searchable claims.

2. ☑   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**     ☐   The additional search fees were accompanied by the applicant's protest and, where applicable, the payment of a protest fee.

                    ☐   The additional search fees were accompanied by the applicant's protest but the applicable protest fee was not paid within the time limit specified in the invitation.

                    ☐   No protest accompanied the payment of additional search fees.

Form PCT/ISA/210 (continuation of first sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009257981 A

- WO 2017110417 A1